# EUROPEAN PATENT APPLICATION

(11) **EP 2 463 625 A1**
(43) Date of publication of application: **13.06.2012**
(21) Application number: 09848049.4
(22) Date of filing: 05.08.2009
(51) Int. Cl.: G01C 21/00, G08G 1/137

(54) **ROUTE GUIDING SYSTEM, ROUTE GUIDING SERVER, ROUTE GUIDING MEDIATION SERVER, AND ROUTE GUIDING METHOD**

(71) Applicant: Navitime Japan Co., Ltd., Tokyo 107-0062 (JP)
(72) Inventor: UYAMA, Hiroshi, Tokyo 107-0062 (JP); TAKAYAMA, Ryo, Tokyo 107-0062 (JP)
(74) Representative: HOFFMANN EITLE
(86) International application number: PCT/JP2009/063864
(87) International publication number: WO 2011/016117

(57) **Abstract**

When there exists a plurality of route guiding servers designating a predetermined area as a service provision area, a terminal device (20) is capable of selecting a route guiding server suitable for processing to request. A route guiding server (30A) having received a process request from the terminal device (20) judges the area subjected to the process request and route searching servers (30B1 etc.) designating the area as a service provision area. When there exists a plurality of route guiding servers in an identical area, the route guiding server (30A) acquires detailed information relating to server-held data held by each route searching server (30B1 etc.), sets numerical values expressing ranking according to the degree of fullness, the quantity of information, and the date of the latest update of the server-held data as evaluation values, calculates the evaluation value of each route searching server (30B1 etc.) from the total of the evaluation values, and transmits server information containing the evaluation value. The terminal device (20) selects one of the route searching servers (30B1 etc.) according to the server information received from the route guiding server (30A).

## Description

### TECHNICAL FIELD

The present invention relates to route guiding system for providing a route guiding service, such as route searching or route guiding, map information, point of interest (POI) information guiding, and the like, within a predetermined area; and relates in particular to a route guiding system, a route guiding server, a route guiding mediation server, and a route guiding method designed so that, in cases where, in every one of a number of areas which are countries or regions, there exists a system providing a route guiding service within the area in question, with a plurality of route guiding servers for compiling information of respectively different levels within a predetermined area, a terminal device requesting a process such as a route guiding service in relation to a desired area or the like can select an appropriate route guiding server, depending on the request.

### BACKGROUND ART

In conventional practice, there have been known navigation devices and navigation systems for employing map data or street data to search for a route from a desired departure place to a destination, and to guide a utilizing individual. Practical applications of such navigation devices and navigation systems have included communication-type navigation systems and the like, in which, utilizing a mobile telephone or a car navigation device installed in an automobile to provide route guiding to a driver as a navigation terminal, a route search request is sent to a route searching server, and the result is received to get route guiding.

In particular, communication-type navigation systems are systems that utilize mobile telephones or other such mobile terminals as navigation terminals, and are sometimes employed as navigation systems by pedestrians. For a navigation system for pedestrians, it is preferable to add a route guiding function that includes transit; there are also navigation systems having a function whereby, in addition to walking route searching and guiding, transit line and operating time data for transit are compiled on a route guiding server, and guiding for routes from desired departure train stations to desired destination train stations (train line candidates) are included in addition to searches and guiding for walking routes. There are also transit guiding systems for receiving and displaying information downloaded from an information distribution server in regard to transit lines and time schedules for transit, train lines which may be taken, and the like, without an accompanying route search for a walking route.

A typical navigation device, a route searching device for use in a communication navigation system, and a route searching method are disclosed, for example, in the following Patent Document 1 (Japanese Laid-open Patent Application 2001-165681). This navigation system is configured so that information about a departure place and a destination is sent from a mobile navigation terminal to an information distribution server, whereupon the information distribution server searches and guides route that meets the search parameters, from street network and transit network data. Possible search parameters include means of travel from a departure place to a destination, for example, by walking, by car, or by a combination of rail and walking; and the route search may use this as one search parameter.

The information distribution server comprises a database having streets (routes) of map data as nodal points thereof, positions of turning points as nodes, and routes linking nodes together as links, as well as containing cost information (distance and required time) for all of the links. The information distribution server can then refer to the database to sequentially search for links from the node of the departure place to the node of the destination, and designate a guidance route which follows along nodes and links associated with the lowest link cost information, to thereby guide the mobile navigation terminal to the shortest route. Methods known as the label-correcting method or the Dijkstra method may be employed as the method of this manner of route search. In Patent Document 1 above, a route search method that employs the Dijkstra method is also disclosed.

A route search system adapted to search for routes utilizing transit systems comprises an operation time database of operation time data for transit systems tabulated in a database on the basis of user-specified route search parameters such as departure date and time, departure place, destination, arrival time, and the like; and data of transit networks tabulated in a database on the basis thereof. The configuration is such that, with reference to these databases, useable transit means (individual trains and bus lines) which connect a departure place to a destination, inclusive of any connections (transfers), are sequentially followed along by way of a route; and one or a plurality of candidates for a guidance route (a departure train station, a destination train station, a transit line, a train, or other transit means) in accordance with the route search parameters are presented. Typically, parameters such as required time, number of connections, fare, and the like are also specified as route search parameters as well.

To provide store or event information, a user manipulates the mobile terminal and inputs a category such as Stores or Events, as well as a region to look up, and requests lookup. The server looks up stores or events in the region in question, which fall into the category specified by the user, and distributes the information to a map display terminal. In providing a time schedule, the user manipulates the mobile terminal and specifies a transit line, whereupon a time schedule for the transit line in question is presented on the screen of the display device of the mobile terminal. Also, in transfer guidance, the user specifies a departure place and a destination, whereby a recommended route is presented.

Further, one can connect to a map server over the Internet from a terminal device such as a PC, mobile telephone, or the like; input a desired location, facility, store address, name, phone number, or the like; download map data of a predetermined range including the location or facility, or the store location; and display a map image on the display device.

Typically, in order to minimize the amount of data during communication, map data for use in map image display in a communication-type navigation system is constituted by vector map data, rather than bitmap data (raster map data). Vector map data is composed of polygon data for displaying, in a state approximating the natural terrapin, streets which are included in maps of mesh units; and street data in which street links are represented by vectors. Street data represented by vectors is employed during rendering of guidance routes and route history on map images. During route guiding, the current location of the map display device is rendered on the searched route or the street data. Current location is calculated by satellite navigation, employing a GPS receiver furnished to the map display device.

The map data, route-search network data, or point of interest (POI) data for facilities, stores, events, and the like included in a typical route guiding system is data for the area provided with a route guiding service (also termed a service area) by the system. For example, a normal route guiding system is targeted to service within a given country, or to a particular region within a country.

In this case, as long as a departure place and a destination are within the service area of the route guiding system, no difficulties arise in route searching or route guiding. However, in a case where a departure place is within one country while the destination is within another different country, a total route from the departure place to the destination can be neither searched for nor guided. The reason is that the range of routes that can be searched and guided by the route guiding system where the departure place lies is within same country as the departure place, and the system does not comprise map data, route-search network data, POI data, and the like for the country of the destination.

In on-vehicle navigation devices and the like, there may be employed a method whereby route-search network data and map data for a particular region is stored in the on-vehicle navigation device, and in a case where a location outside of this area has been set as a departure place, a route search is solicited from a server comprising route-search network data and map data for the entire country including other regions, or route-search network data and map data for the missing region is downloaded, so that route searching is possible on the navigation device end.

For example, the following Patent Document 2 (Japanese Laid-open Patent Application 2003-97960) discloses an invention of such a route guiding device. During route searching from a departure place to a destination, at a center, this route guiding device determines a plurality of candidate origin points along the route. Once the origin points are transmitted to the route guiding device, the route guiding device determines a guidable origin point and transmits it to the center. The configuration is one whereby the center carries out a route search to that origin point from the departure place, while the guiding device carries out a route search from the origin point to the destination, so as to provide an optimal route from the departure place to the destination.

The following Patent Document 3 (Japanese Laid-open Patent Application 2001-4392) discloses a map display system designed such that current location and destination information are transmitted as map lookup parameters to a map server from a terminal device which is a mobile telephone; the map server generates guidance information and map information according to the lookup parameters for distribution to the mobile telephone; and in the mobile telephone, the guidance information and map information are integrated and displayed on a display device.

### [Prior Art Documents]

### [Patent Documents]

[Patent Document 1]
   Japanese Laid-open Patent Application 2001-165681 (FIG. 1, FIG. 2)
[Patent Document 2]
   Japanese Laid-open Patent Application 2003-97960 (FIG. 1, FIG. 2)
[Patent Document 3]
   Japanese Laid-open Patent Application 2001-4392 (FIG. 4, FIG. 6)

### DISCLOSURE OF THE INVENTION

### [Problems the Invention Is Intended To Solve]

As discussed previously, there are cases in which, employing only map data, route-search network data, and POI data that a given route guiding service comprises for the purpose of providing service, route guiding service cannot be provided. If, as taught in the invention of the route guiding device disclosed in the aforedescribed Patent Document 2, by working cooperatively with another route guiding system, portions that cannot be route-searched with the one system can instead be searched utilizing the route searching function of the other route guiding system so that the two route guiding systems can link a searched guidance route, a service request from a utilizing individual can be accommodated. This is not limited to route guiding; a similar situation applies to various other information providing systems that provide map information.

However, in some cases, depending on the country, provision of map data, street networks, and public transportation network data to other countries may be prohibited. Such restrictions are largely for national security reasons. In the route guiding device disclosed in the aforedescribed Patent Document 2, it is assumed that in the system, the map data held by the route guiding device is map data for a local area, and that the server holds map data for the whole country, including the map data for local areas held by navigation devices.

In route guiding systems that provide route information such as route searching or route guiding, map information, point of interest (POI) information, and the like, it is necessary to create route-search network data and POI data from map data, street network, and public transportation network information, and to hold the data in database form; and to hold a map database which compiles map information for the purpose of guiding utilizing individuals along routes. In cases where a route guiding system is to provide service beyond a single country, map data, street network and public transportation network data, and POI data will be necessary not only for the home country, but also for other countries where service is to be provided. Consequently, a problem in such cases is that the technique of the route guiding device disclosed in the aforedescribed Patent Document 2 cannot be implemented.

The present applicant previously carried out filing of an international patent application for the invention of PCT/JP20008/058182, with an object of providing a route guiding system whereby route guiding systems respectively comprising map data and route-search network data for countries or regions are made to work cooperatively, so that a series of route guiding services from a departure place to a destination in another country or region may be transferred smoothly from system to system.

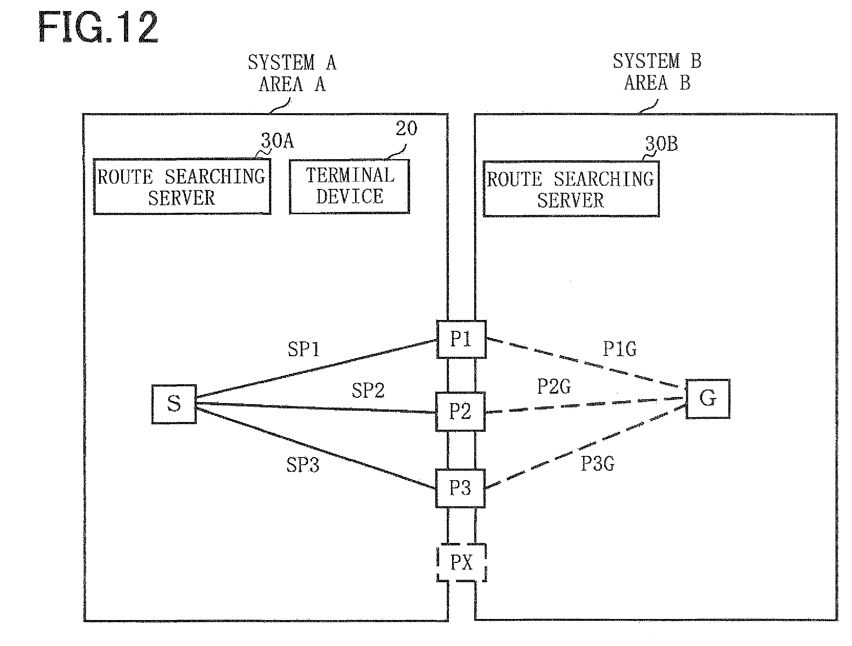

The invention disclosed in the specification of international patent application PCT/JP20008/058182 teaches first and second route guiding systems working cooperatively and comprising route-search network data and map data for countries or regions, and is configured as in FIG. 12. In FIG. 12, system A is a route guiding system with an area A as the service provision area, and system B is a route guiding system with an area B as the service provision area, the respective system A and system B being systems having a configuration comparable to the route guiding system shown in FIG. 12.

A route searching server 30A has route-search network data and map data covering area A only, while a route searching server 30B has route-search network data and map data covering area B only. Consequently, the route searching server 30A cannot search for a route having a point within area B as the departure place or the destination; and the route searching server 30B cannot search for a route having a point within area A as the departure place or the destination.

In cases where the departure place and the destination in a route search request from a terminal device 20 are points within different areas, the first route guiding system (A) extracts a candidate contact point as a border with a different area, and sends it to the second route guiding system (B). The first and second route guiding systems search for an optimal route from the departure place to the candidate contact point, and an optimal candidate route from the candidate contact point to the destination, respectively, with the respective route guiding systems being provided with predetermined times and link data therefor; and from candidate routes linked by the candidate contact point, the first and second route guiding systems determine a recommended route which affords the smallest total predetermined time, whereupon recommended route data including link data is provided from the first route guiding system (A) to the terminal device. The terminal device, depending on the area in which it is located, requests route guiding based on the recommended route data from either the first or second route guiding system.

According to this system configuration, in cases where route guiding is carried out to a place outside a service provision area whose map data and the like is not retained, only information for a contact point from the service provision area to an area belonging to a destination area outside the service provision area is retained; and by utilizing the respective sets of route guiding information which respectively have only the contact point information in common, it is possible to provide seamless route guiding from a departure place in the service provision area to a destination outside the service provision area. Consequently, through working cooperatively by route guiding systems respectively comprising map data and route-search network data for countries or regions, a series of route guiding services from a departure place to a destination in another country or region may be transferred smoothly from system to system.

However, the following point was not taken into consideration in the system shown in FIG. 12. Specifically, there was not taken into a consideration a system in which there exists a plurality of servers offering various route guiding services, such as route searching, route guiding, provision of map information, POI lookup, transit line guiding, and the like, within an identical area. In cases where there exists a plurality of servers, the information (data) for the various services retained by individual servers may differ in terms of the level of detail, the frequency of updating, and the like; and while it is preferable for service requests to be solicited from a server having information (data) suited to the service being requested by a terminal device, a problem is that no tools are provided for selecting the server from the terminal device end. A similar problem is encountered in cases where there exists a plurality of servers within a system that provides service to an area different from the area where a terminal device is located.

As a result of repeated research of various kinds directed to overcoming the aforedescribed issue, the inventors perfected the present invention upon arriving at the idea of solving the aforedescribed problem through a system for providing route guiding services within each area of areas which are countries or regions, wherein in cases where a plurality of route guiding servers exist within systems, and the route guiding servers compile information of respectively different levels, in a case where there has been a process request from a terminal device for route guiding services or the like in relation to a desired area, the route guiding server which has received the request acquires and evaluates detailed information from the plurality of route guiding servers within the area in question and relating to data respectively retained thereby, and provides an evaluation value thereof to the terminal device, whereby an appropriate route guiding server may be selected in the terminal device.

Specifically, with a view to solving the aforedescribed problem, it is an object of the present invention to provide a system for providing a route guiding service within each area of areas which are countries or regions, wherein the route guiding system is designed such that, in a case where a plurality of route guiding servers within a predetermined area compile information of respectively different levels, a terminal device requesting a route guiding service relating to a desired area can select an appropriate route guiding server depending on the request.

### [Means for Resolving the Problem]

In order to resolve the problem, a first invention of the present application resides in
a route guiding system made of route guiding servers for which a predetermined area is designated as a service provision area, and in which map data within the predetermined area, street network data and transit network data of the area for use in route searching, and POI data are server-held data; and a terminal device connected to the route guiding servers via a network, wherein individual route searching servers, on the basis of a process request requested by the terminal device, work cooperatively with one another, refer to the contents-held data, and execute the requested process; characterized in that
the route guiding servers comprise area judging means, server judging means, server information acquiring means, and server evaluating means; and the terminal device comprises server selecting means for selecting one of the plurality of route guiding servers on the basis of server information received from the route guiding servers;
the route guiding server that receives the process request from the terminal device judges, through the agency of the area judging means, an area subjected to processing in the process request; the server judging means judges a route guiding server designating the area that was judged by the area judging means as the service provision area; in a case where there exist a plurality of route guiding servers for which an identical area is designated as the service provision area, the server information acquiring means acquires detailed information relating to the server-held data from the given plurality of route guiding servers; and, on the basis of the detailed information, the server evaluating means sets, as an evaluation value, a numerical value expressing a predetermined ranking according to any one or plurality of the degree of fullness, the quantity of information, and the date of the latest update of the server-held data of each of the route guiding servers, calculates the evaluation value of each of the route guiding servers from the total of the evaluation values, and transmits server information including the evaluation values to the terminal device; and
the terminal device, on the basis of the server information received from the route guiding server, selects one of the plurality of route guiding servers through the agency of the server selecting means, and notifies the route guiding server of the selected route guiding server.

An aspect of the first invention of the present application is the first invention, characterized in that the map data is made of a map mesh sectioned by predetermined latitude and longitude, and includes map data sectioned by ranking, from high-order mesh map data of the widest range of latitude and longitude to low-order mesh map data obtained through division of the higher order meshes into a predetermined number of divisions; and the server evaluating means calculates, for a route guiding server including more of the low-order mesh map data in the server-held data, an evaluation value that is higher than the evaluation values for other route guiding servers.

An aspect of the first invention of the present application is the first invention, characterized in that the detailed information of the server-held data includes date-of-data-update information; and the server evaluating means calculates, for a route guiding server that has acquired detailed information having date-of-update information closer to the current date, an evaluation value that is higher than the evaluation values for other route guiding servers.

An aspect of the first invention of the present application is the first invention, characterized in that the POI data includes POI category classes and POI information belonging to the respective POI category classes; and the server evaluating means calculates, for a route searching server having either or both of a greater number of the POI category classes or a greater quantity of POI information belonging to each of the categories, an evaluation value that is higher than the evaluation values for other route searching servers.

An aspect of the first invention of the present application is the first invention, characterized in that in a case where a process request from the terminal device includes a data item considered to be important among specific server-held data, the server evaluating means calculates, for a route searching server having server-held data that corresponds to the given data item considered to be important, an evaluation value that is higher than the evaluation values for other route guiding servers.

A second invention of the present application resides in
a route guiding server constituting a route guiding system which is made of route guiding servers for which a predetermined area is designated as a service provision area, and in which map data within the predetermined area, street network data and transit network data of the area for use in route searching, and POI data are server-held data; and a terminal device connected to the route guiding servers via a network, wherein individual route searching servers, on the basis of a process request requested by the terminal device, work cooperatively with one another, refer to the contents-held data, and execute the requested process; characterized in that
the terminal device is a terminal device for selecting one of the plurality of route guiding servers through the agency of the server selecting means on the basis of the server information received from the route guiding server, and notifying the route guiding server of the selected route guiding server;
the route guiding servers comprise area judging means, server judging means, server information acquiring means, and server evaluating means; and the terminal device comprises server selecting means for selecting one of the plurality of route guiding servers on the basis of server information received from the route guiding servers; and
the route guiding server that receives the process request from the terminal device judges, through the agency of the area judging means, an area subjected to processing in the process request; the server judging means judges a route guiding server designating the area that was judged by the area judging means as the service provision area; in a case where there exist a plurality of route guiding servers for which an identical area is designated as the service provision area, the server information acquiring means acquires detailed information relating to the server-held data from the given plurality of route guiding servers; and, on the basis of the detailed information, the server evaluating means sets, as an evaluation value, a numerical value expressing a predetermined ranking according to any one or plurality of the degree of fullness, the quantity of information, and the date of the latest update of the server-held data of each of the route guiding servers, calculates the evaluation value of each of the route guiding servers from the total of the evaluation values, and transmits server information including the evaluation values to the terminal device.

An aspect of the second invention of the present application is the second invention, characterized in that the map data is made of a map mesh sectioned by predetermined latitude and longitude, and includes map data sectioned by ranking, from high-order mesh map data of the widest range of latitude and longitude to low-order mesh map data obtained through division of the higher order meshes into a predetermined number of divisions; and the server evaluating means calculates, for a route guiding server including more of the low-order mesh map data in the server-held data, an evaluation value that is higher than the evaluation values for other route guiding servers.

An aspect of the second invention of the present application is the second invention, characterized in that the detailed information of the server-held data includes date-of-data-update information; and the server evaluating means calculates, for a route guiding server that has acquired detailed information having date-of-update information closer to the current date, an evaluation value that is higher than the evaluation values for other route guiding servers.

An aspect of the second invention of the present application is the second invention, characterized in that the POI data includes POI category classes and POI information belonging to the respective POI category classes; and the server evaluating means calculates, for a route searching server having either or both of a greater number of the POI category classes or a greater quantity of POI information belonging to each of the categories, an evaluation value that is higher than the evaluation values for other route searching servers.

An aspect of the second invention of the present application is the second invention, characterized in that that in a case where a process request from the terminal device includes a data item considered to be important among specific server-held data, the server evaluating means calculates, for a route searching server having server-held data that corresponds to the given data item considered to be important, an evaluation value that is higher than the evaluation values for other route guiding servers.

A third invention of the present application resides in
a route guiding method in a route guiding system which is made of route guiding servers for which a predetermined area is designated as a service provision area, and in which map data within the predetermined area, street network data and transit network data of the area for use in route searching, and POI data are server-held data; and a terminal device connected to the route guiding servers via a network, wherein individual route searching servers, on the basis of a process request requested by the terminal device, work cooperatively with one another, refer to the contents-held data, and execute the requested process; characterized in that
the route guiding servers comprise area judging means, server judging means, server information acquiring means, and server evaluating means; and the terminal device comprises server selecting means for selecting one of the plurality of route guiding servers on the basis of server information received from the route guiding servers;
the route guiding server that receives the process request from the terminal device judges, through the agency of the area judging means, an area subjected to processing in the process request; the server judging means judges a route guiding server designating the area that was judged by the area judging means as the service provision area; in a case where there exist a plurality of route guiding servers for which an identical area is designated as the service provision area, the server information acquiring means acquires detailed information relating to the server-held data from the given plurality of route guiding servers; and, on the basis of the detailed information, the server evaluating means sets, as an evaluation value, a numerical value expressing a predetermined ranking according to any one or plurality of the degree of fullness, the quantity of information, and the date of the latest update of the server-held data of each of the route guiding servers, calculates the evaluation value of each of the route guiding servers from the total of the evaluation values, and transmits server information including the evaluation values to the terminal device; and
the terminal device, on the basis of the server information received from the route guiding server, selects one of the plurality of route guiding servers through the agency of the server selecting means, and notifies the route guiding server of the selected route guiding server.

An aspect of the third invention of the present application is the third invention, characterized in that the map data is made of a map mesh sectioned by predetermined latitude and longitude, and includes map data sectioned by ranking, from high-order mesh map data of the widest range of latitude and longitude to low-order mesh map data obtained through division of the higher order meshes into a predetermined number of divisions; and the server evaluating means calculates, for a route guiding server including more of the low-order mesh map data in the server-held data, an evaluation value that is higher than the evaluation values for other route guiding servers.

An aspect of the third invention of the present application is the third invention, characterized in that the detailed information of the server-held data includes date-of-data-update information; and the server evaluating means calculates, for a route guiding server that has acquired detailed information having date-of-update information closer to the current date, an evaluation value that is higher than the evaluation values for other route guiding servers.

An aspect of the third invention of the present application is the third invention, characterized in that the POI data includes POI category classes and POI information belonging to the respective POI category classes; and the server evaluating means calculates, for a route searching server having either or both of a greater number of the POI category classes or a greater quantity of POI information belonging to each of the categories, an evaluation value that is higher than the evaluation values for other route searching servers.

An aspect of the third invention of the present application is the third invention, characterized in that in a case where a process request from the terminal device includes a data item considered to be important among specific server-held data, the server evaluating means calculates, for a route searching server having server-held data that corresponds to the given data item considered to be important, an evaluation value that is higher than the evaluation values for other route guiding servers.

A fourth invention of the present application resides in
a route guiding system made of route guiding servers for which a predetermined area is designated as a service provision area, and in which map data within the predetermined area, street network data and transit network data of the area for use in route searching, and POI data are server-held data; a terminal device connected to the route guiding servers via a network; and a route guiding mediation server connected to the route guiding servers via the network; wherein individual route searching servers, on the basis of a process request requested by the terminal device, work cooperatively with one another via the route guiding mediation server, refer to the contents-held data, and execute the requested process; characterized in that
the terminal device comprises server selecting means for selecting one of the plurality of route guiding servers on the basis of server information received from the route guiding servers;
the route guiding mediation server comprises area judging means, server judging means, and server information acquiring means; and the route guiding servers comprise server evaluating means;
when the route guiding mediation server receives a process request from the route guiding server that received a process request from the terminal device, an area subjected to processing in the process request is judged by the area judging means; the server judging means judges a route guiding server designating the area that was judged by the area judging means as the service provision area; in a case where there exist a plurality of route guiding servers designating an identical area as the service provision area, the server information acquiring means acquires detailed information relating to the server-held data from the given plurality of route guiding servers and transmits the information to the route guiding servers; and, through the agency of the server evaluating means, the route searching servers set, as an evaluation value, a numerical value expressing a predetermined ranking according to any one or plurality of the degree of fullness, the quantity of information, and the date of the latest update of the server-held data of each of the route guiding servers, calculates the evaluation value of each of the route guiding servers from the total of the evaluation values, and transmits server information including the evaluation values to the terminal device.

An aspect of the fourth invention of the present application is the fourth invention, characterized in that the map data is made of a map mesh sectioned by predetermined latitude and longitude, and includes map data sectioned by ranking, from high-order mesh map data of the widest range of latitude and longitude to low-order mesh map data obtained through division of the higher order meshes into a predetermined number of divisions; and the server evaluating means calculates, for a route guiding server including more of the low-order mesh map data in the server-held data, an evaluation value that is higher than the evaluation values for other route guiding servers.

An aspect of the fourth invention of the present application is the fourth invention, characterized in that the detailed information of the server-held data includes date-of-data-update information; and the server evaluating means calculates, for a route guiding server that has acquired detailed information having date-of-update information closer to the current date, an evaluation value that is higher than the evaluation values for other route guiding servers.

An aspect of the fourth invention of the present application is the fourth invention, characterized in that the POI data includes POI category classes and POI information belonging to the respective POI category classes; and the server evaluating means calculates, for a route searching server having either or both of a greater number of the POI category classes or a greater quantity of POI information belonging to each of the categories, an evaluation value that is higher than the evaluation values for other route searching servers.

An aspect of the fourth invention of the present application is the fourth invention, characterized in that in a case where a process request from the terminal device includes a data item considered to be important among specific server-held data, the server evaluating means calculates, for a route searching server having server-held data that corresponds to the given data item considered to be important, an evaluation value that is higher than the evaluation values for other route guiding servers.

A fifth invention of the present application resides in
a route guiding mediation server in a route guiding system made of route guiding servers for which a predetermined area is designated as a service provision area, and in which map data within the predetermined area, street network data and transit network data of the area for use in route searching, and POI data are server-held data; a terminal device connected to the route guiding servers via a network; and a route guiding mediation server connected to the route guiding servers via the network; wherein individual route searching servers, on the basis of a process request requested by the terminal device, work cooperatively with one another via the route guiding mediation server, refer to the contents-held data, and execute the requested process; characterized in that
the terminal device comprises server selecting means for selecting one of the plurality of route guiding servers on the basis of server information received from the route guiding servers;
the route guiding servers are route guiding servers which comprise server evaluating means, and which, through the agency of the server evaluating means and on the basis of server information acquired from the route guiding mediation server, set, as an evaluation value, a numerical value expressing a predetermined ranking according to any one or plurality of the degree of fullness, the quantity of information, and the date of the latest update of the server-held data of each of the route guiding servers, calculate the evaluation value of each of the route guiding servers from the total of the evaluation values, and transmit server information including the evaluation values to the terminal device;
the route guiding mediation server comprises area judging means, server judging means, and server information acquiring means; and the route guiding servers comprise server evaluating means; and
when the route guiding mediation server receives a process request from the route guiding server that received a process request from the terminal device, an area subjected to processing in the process request is judged by the area judging means; the server judging means judges a route guiding server designating the area that was judged by the area judging means as the service provision area; in a case where there exist a plurality of route guiding servers designating an identical area as the service provision area, the server information acquiring means acquires detailed information relating to the server-held data from the given plurality of route guiding servers and transmits the information to the route guiding servers.

An aspect of the fifth invention of the present application is the fifth invention, characterized in that the map data is made of a map mesh sectioned by predetermined latitude and longitude, and includes map data sectioned by ranking, from high-order mesh map data of the widest range of latitude and longitude to low-order mesh map data obtained through division of the higher order meshes into a predetermined number of divisions; and the server evaluating means calculates, for a route guiding server including more of the low-order mesh map data in the server-held data, an evaluation value that is higher than the evaluation values for other route guiding servers.

An aspect of the fifth invention of the present application is the fifth invention, characterized in that the detailed information of the server-held data includes date-of-data-update information; and the server evaluating means calculates, for a route guiding server that has acquired detailed information having date-of-update information closer to the current date, an evaluation value that is higher than the evaluation values for other route guiding servers.

An aspect of the fifth invention of the present application is the fifth invention, characterized in that the POI data includes POI category classes and POI information belonging to the respective POI category classes; and the server evaluating means calculates, for a route searching server having either or both of a greater number of the POI category classes or a greater quantity of POI information belonging to each of the categories, an evaluation value that is higher than the evaluation values for other route searching servers.

An aspect of the fifth invention of the present application is the fifth invention, characterized in that in a case where a process request from the terminal device includes a data item considered to be important among specific server-held data, the server evaluating means calculates, for a route searching server having server-held data that corresponds to the given data item considered to be important, an evaluation value that is higher than the evaluation values for other route guiding servers.

A sixth invention of the present application resides in
a route guiding method in a route guiding system made of route guiding servers for which a predetermined area is designated as a service provision area, and in which map data within the predetermined area, street network data and transit network data of the area for use in route searching, and POI data are server-held data; a terminal device connected to the route guiding servers via a network; and a route guiding mediation server connected to the route guiding servers via the network; wherein individual route searching servers, on the basis of a process request requested by the terminal device, work cooperatively with one another via the route guiding mediation server, refer to the contents-held data, and execute the requested process; characterized in that
the terminal device comprises server selecting means for selecting one of the plurality of route guiding servers on the basis of server information received from the route guiding servers;
the route guiding mediation server comprises area judging means, server judging means, and server information acquiring means; and the route guiding servers comprise server evaluating means; and
when the route guiding mediation server receives a process request from the route guiding server that received a process request from the terminal device, an area subjected to processing in the process request is judged by the area judging means; the server judging means judges a route guiding server designating the area that was judged by the area judging means as the service provision area; in a case where there exist a plurality of route guiding servers designating an identical area as the service provision area, the server information acquiring means acquires detailed information relating to the server-held data from the given plurality of route guiding servers and transmits the information to the route guiding servers; and the route searching servers, through the agency of the server evaluating means and on the basis of the detailed information, set, as an evaluation value, a numerical value expressing a predetermined ranking according to any one or plurality of the degree of fullness, the quantity of information, and the date of the latest update of the server-held data of each of the route guiding servers, calculate the evaluation value of each of the route guiding servers from the total of the evaluation values, and transmit server information including the evaluation values to the terminal device.

An aspect of the sixth invention of the present application is the sixth invention, characterized in that the map data is made of a map mesh sectioned by predetermined latitude and longitude, and includes map data sectioned by ranking, from high-order mesh map data of the widest range of latitude and longitude to low-order mesh map data obtained through division of the higher order meshes into a predetermined number of divisions; and the server evaluating means calculates, for a route guiding server including more of the low-order mesh map data in the server-held data, an evaluation value that is higher than the evaluation values for other route guiding servers.

An aspect of the sixth invention of the present application is the sixth invention, characterized in that the detailed information of the server-held data includes date-of-data-update information; and the server evaluating means calculates, for a route guiding server that has acquired detailed information having date-of-update information closer to the current date, an evaluation value that is higher than the evaluation values for other route guiding servers.

An aspect of the sixth invention of the present application is the sixth invention, characterized in that the POI data includes POI category classes and POI information belonging to the respective POI category classes; and the server evaluating means calculates, for a route searching server having either or both of a greater number of the POI category classes or a greater quantity of POI information belonging to each of the categories, an evaluation value that is higher than the evaluation values for other route searching servers.

An aspect of the sixth invention of the present application is the sixth invention, characterized in that in a case where a process request from the terminal device includes a data item considered to be important among specific server-held data, the server evaluating means calculates, for a route searching server having server-held data that corresponds to the given data item considered to be important, an evaluation value that is higher than the evaluation values for other route guiding servers.

### [Effect of the Invention]

In the first invention of the present application, a route searching server having received a process request from a terminal device judges an area subjected to the process request, as well as a route searching server designating that area as the service provision area. In a case where there are a given plurality of route searching servers, detailed information relating to the server-held data is acquired from each of the route searching servers and the held data of each server is evaluated. Server information including the evaluation result is transmitted to the terminal device; and selection of a server is prompted in the terminal device. Therefore, by selecting a server with a high evaluation, it is possible for the terminal device requesting a route guiding service in relation to a desired area to select an appropriate route guiding server, depending on the request.

In an aspect of the first invention of the present application, since, in the first invention the server evaluating means calculates, for a route guiding server having server-held data that includes more of the aforedescribed low-order mesh map data, an evaluation value that is higher than the evaluation values for other route guiding servers, the terminal device can select a server holding detailed map data.

In an aspect of the first invention of the present application, since, in the first invention, the server evaluating means calculates, for a route guiding server that has acquired detailed information having date-of-update information closer to the current date, an evaluation value that is higher than the evaluation values for other route guiding servers, the terminal device can select a server holding a newer date of update.

In an aspect of the first invention of the present application, in the first invention, the POI data includes POI category classes and POI information belonging to the respective POI category classes; and the server evaluating means calculates, for a route searching server having either or both of a greater number of the POI category classes or a greater quantity of POI information belonging to each of the categories, an evaluation value that is higher than the evaluation values for other route searching servers. Consequently, the terminal device can select a server with either or both of a greater number of the POI category classes or a greater quantity of POI information belonging to each of the categories.

In an aspect of the first invention of the present application, in the first invention, in a case where a process request from the terminal device includes a data item considered to be important among specific server-held data, the server evaluating means calculates, for a route searching server having server-held data that corresponds to the given data item considered to be important, an evaluation value that is higher than the evaluation values for other route guiding servers. Consequently, the terminal device can select a server whose server-held data can appropriately respond to the process request of the terminal device.

In the second invention of the present application, there can be provided a route guiding server constituting the route guiding system of the first invention of the present application; and in the third invention of the present application, there can be provided a route guiding method in the first invention of the present application. In the fourth invention of the present application, the route guiding system of the first invention of the present application can be constituted employing a route guiding mediation server; in the fifth invention of the present application, there can be provided a route guiding mediation server constituting the route guiding system of the fourth invention of the present application; and in the sixth invention of the present application, there can be provided a route guiding method in the fourth invention of the present application.

### [Brief Description of the Drawings]

FIG. 1 is a system configuration diagram representing a configuration of a route guiding system according to the present invention;
FIG. 2 is a system configuration diagram depicting an outline of route searching and route guiding in the route guiding system of the present invention;
FIG. 3 is a diagram representing an outline of a configuration of map data;
FIG. 4 is a drawing showing an example of detailed information of data retained by a route guiding server, with FIG. 4A being a drawing showing an example of detailed information of map data, FIG. 4B being a drawing showing an example of update history of data, and FIG. 4C being a drawing showing an example of detailed information of POI data;
FIG. 5 is a block diagram representing a detailed configuration of a route guiding server constituting the route guiding system according to the present invention;
FIG. 6 is a drawing showing an example of a server selection screen displayed on a terminal device, with FIG. 6A being a drawing showing an example of recommended servers displayed in order of evaluation value, and FIG. 6B being one showing an example of server names displayed together with images showing the magnitude of the evaluation values thereof, in such a way that recommended servers can be recognized;
FIG. 7 is a an outline diagram depicting street network data used in route searching in the present invention;
FIG. 8 is an outline diagram depicting transit network data used in route searching in the present invention;
FIG. 9 is a flowchart depicting an operational procedure of a route guiding server (route searching server);
FIG. 10 is a flowchart depicting an operational procedure of a terminal device;
FIG. 11 is a block diagram representing a configuration of a route guiding mediation server; and
FIG. 12 is a system configuration diagram depicting an outline of a route guiding service performed by a plurality of route guiding systems for different service areas.

### [Description of Symbols]

- 10: Route guiding system
- 20: Terminal device
- 30A, 30B1-30B3: Route guiding servers (route searching servers)
- 32: Map database
- 33: Route searching network database
- 34: POI information database
- 301: Control means
- 302: Communication means
- 303: Process request storage means
- 304: Area judging means
- 305: Server judging means
- 306: Candidate node extracting means
- 307: Route searching means
- 308: Navigation information editing means
- 309: Server information acquiring means
- 311: Server evaluating means
- 312: Candidate route linking means
- 313: Recommended route determination means
- 314: Route storage means

### BEST MODE FOR CARRYING OUT THE INVENTION

The present invention is described in detail hereinbelow with reference to specific examples and drawings. The examples shown hereinbelow are intended to depict a route guiding system for specifying the technological concepts of the present invention but are not intended to limit the present invention to this route guiding system; they are equally applicable to other embodiments of a route guiding system included within the scope of the claims.

### [Example 1]

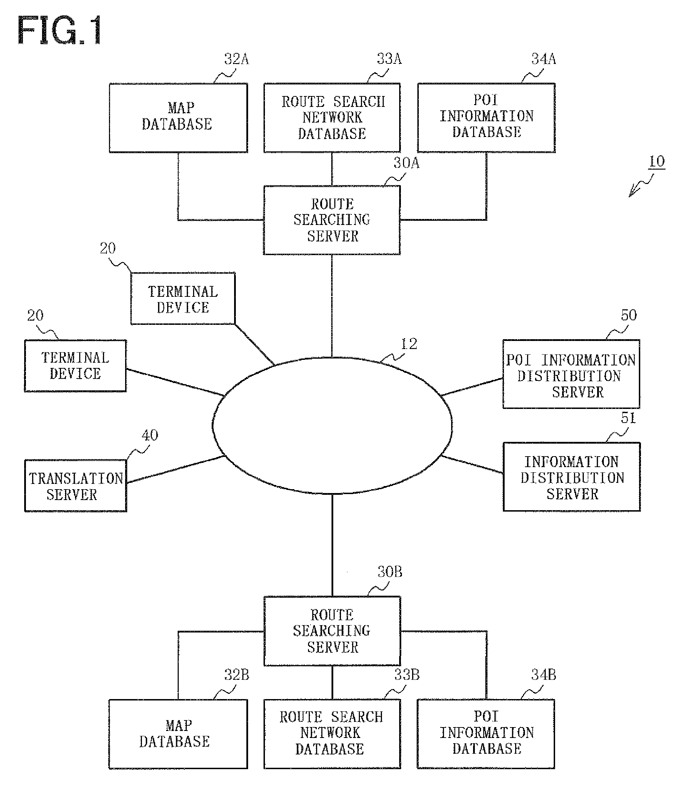

FIG. 1 is a system configuration diagram representing a configuration of a route guiding system 10 according to the present invention. As shown in FIG. 1, the route guiding system 10 configuration comprises terminal devices 20, a first route guiding server (route searching server 30A), and a second route guiding server (searching server 30B), which are connected via a network 12. The first and second route guiding servers (route searching servers 30A, 30B) of this route guiding system 10 respectively designate specific countries or regions as areas for providing route searching and route guiding services, and the respective route guiding servers (searching servers 30A, 30B) only have map data and route searching network data covering a specific service provision area.

While only the first and second route guiding servers (route searching servers 30A, 30B) are shown in FIG. 1, there are a plurality of other such service provision areas as well, each of which being provided with route guiding servers that work cooperatively with one another to carry out route guiding such as route searching, provision of map information, and the like. The first and second route guiding servers (route searching servers 30A, 30B) also retain data relating to points of interest (POI) within areas, and have a POI lookup function whereby they can provide map information, including a resident location of a looked up POI; or search for and guide along a route from a specified point to a looked-up POI. In the following description, route guiding servers shall be referred to as route searching servers.

The route guiding system 10 configuration comprises a POI information distribution server 50 for providing detailed information such as locations of points of interest (POI) belonging to various categories, service content, and the like; various information distribution servers 51 for providing contents such as music, various images, and the like, or other information; and the like. Because of this, the first and second route searching servers 30A can acquire necessary data from the POI information distribution server 50 and the other information distribution servers 51 through the network 12, and add the information to their own database. Also, the first and second route searching servers 30A, 30B can similarly transmit lookup requests to the POI information distribution server 50 and the other information distribution servers 51, and acquire desired lookup results. Also, as terminal devices 20 there can be employed mobile telephones, as well as mobile devices such as PDA, music players, portable game devices, and the like, or mobile PCs.

The first and second route searching servers 30A, 30B shown in FIG. 1 respectively comprise map databases 32A, 32B and route searching network databases 33A, 33B; and when there is a route searching request from a terminal device 20, refer to the route searching network databases 33A, 33B and search for a route. Guidance route data for an optimum route or candidate routes obtained as a result of route searching is transmitted to the terminal device 20. When there is an acquisition request from a terminal device 20 for map data relating to a desired point or a POI lookup, reference is made to the map databases 32A, 32B, and the map data in question is read out and distributed to the terminal device 20.

The route searching network databases 33A, 33B comprise street network data for searching for walking or auto routes; and transit network data for searching for routes of travel employing transit agencies such as rail, air, ship, bus, and the like. The street network data represents streets as links connecting nodes, with the nodes being intersection points or nodal points; and with each link there is associated, as a cost of the link, a required time in the case of travel thereon at a standard speed.

The transit network data represents each of the transit agency lines as links connecting nodes, the nodes being train stations, airports, and harbors thereof, and with individual transit means such as trains, planes, ships, buses, and the like constituting respective links; and is composed of data with which node departure times and node arrival times have been associated on the basis of operating schedules.

In the terminal devices 20, route searching parameters have been set to specify a departure place and a destination, means of travel (classified by walking, auto, transit agency, and the like), a departure time, and the like; and when a route searching request is carried out to the first and second route searching servers 30A, 30B, the first and second route searching servers 30A, 30B refer to the network data of the respective route searching network databases 33A, 33B to search for an optimum route or a plurality of candidate routes from the departure place to the destination, and which meet the route searching parameters; then respond to the terminal device 20 with information about those routes. Once selection of a route and a request for route guiding are made in the terminal device 20, the map data, the selected route data, and guidance data for guiding along the route in question is transmitted to the terminal device 20.

In the present invention, different route guiding servers which designate respectively different areas as their service provision areas are designed so that, working cooperatively, the servers can search for and guide along a recommended route which is an optimum route that minimizes the link cost of a route leading from a departure place to a destination across different areas, according to a departure place and a destination set by a terminal device 20. The procedure for route searching and determining a recommended route relies on the procedure described with reference to FIG. 12.

In some cases, within an area there may exist a plurality of route guiding servers designating the area in question as their service provision area. The respective route guiding servers retain map data, route searching network data, and POI data covering the service provision area. In the present Specification, this data shall be termed server-held data. There may arise instances in which the details of this server-held data, specifically, details such as the degree of fullness, the recentness, the amount of information, and the like, of the server-held data respectively differ by route guiding server.

For example, there may be cases in which the map data has data of various scales (wide-area maps, medium-area maps, city maps, and the like), with each of the route guiding servers holding map data of a different scale. Likewise, for POI data as well, there are cases in which the number of POI categories or of POI held by the respective route guiding servers respectively differ. Further, there are cases in which the dates of updating of the data held by the route guiding servers differ. If the details of the server-held data differ, in a case where a terminal device 20 has solicited a process request for getting provision of a desired service from the route searching server 30A or the like, cases may arise in which satisfactory service is not received, depending on the server-held data of the route searching server 30A or the like.

Accordingly, the present invention is configured such that, in a case where there has been a process request from a terminal device for a route guiding service or the like relating to a desired area, from the plurality of information guiding servers within the area in question, the route guiding server that received the request acquires and evaluates detailed information relating to data held respectively thereby, and provides these evaluation values to the terminal device, whereupon an appropriate route guiding server is selected in the terminal device.

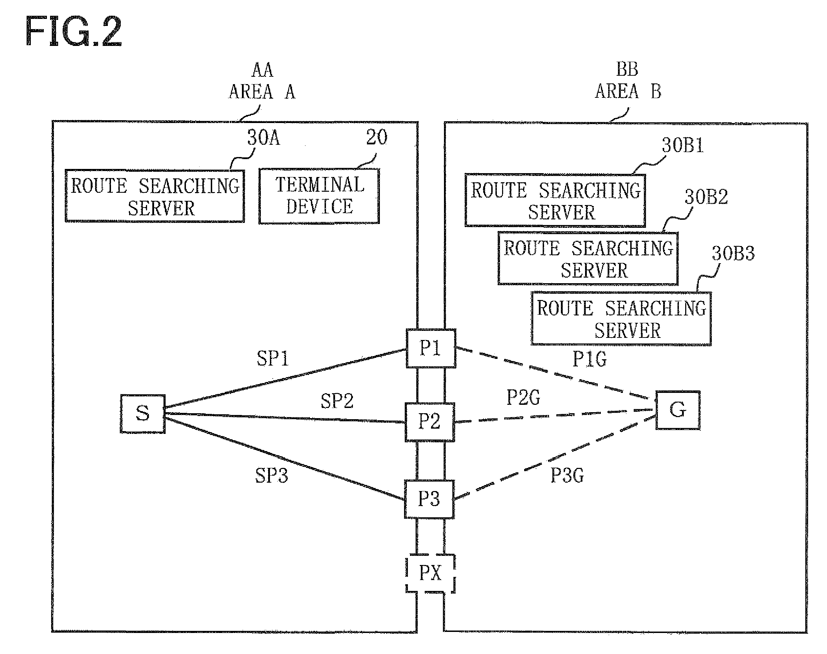

FIG. 2 is a system configuration diagram depicting an outline of route searching and route guiding of the present invention by the route guiding servers working cooperatively in this manner. In FIG. 2, a route searching server 30A designates an area A as its service provision area, and a route searching server 30B1 designates an area B as its service provision area. The configuration is such that other route searching servers 30B2, 30B3 designating the area B as their service provision area exist in the area B.

The route searching server 30A of the area A has only map data and route searching network data covering the area A, while the route searching server 30B1 and the like of the area B have only map data and route searching network data covering the area B. Consequently, the route searching server 30A cannot perform a route search with a point within the area B as the departure place or destination, while the route searching server 30B1 and the like cannot perform a route search with a point within the area A as the departure place or destination.

In a case where a terminal device 20 located within the area A has issued to the route searching server 30A a route search request that crosses between areas, such as one with a departure place S that is a point within the area A and a destination G that is a point within the area B, the route searching server 30A, the route searching server 30B and the like act cooperatively to determine a recommended route which is an optimum route from the departure place S to the destination G, and guide the terminal device 20. During this time, because a plurality of route searching servers 30B1 to 30B32 exist in the area B, there are cases in which the server-held data of the route searching servers 30B1 to 30B3 which designate the area B as their service provision area will respectively differ, and a server that can provide appropriate service is selected from among the route searching servers 30B1 to 30B3, in response to a process request from the terminal device 20.

In the present invention, during server selection, the route guiding server 30A acquires detailed information of server-held data from the individual route searching servers 30B1 to 30B3 designating the area B as their service provision area, carries out an evaluation of the server-held data on the basis thereof, calculates evaluation values, and transmits server information and the evaluation values to the terminal device 20 so that a server can be selected in the terminal device 20. An example of server-held data, and the procedure for evaluation, are described below.

### (Detailed information of server-held data: degree of fullness of map data)

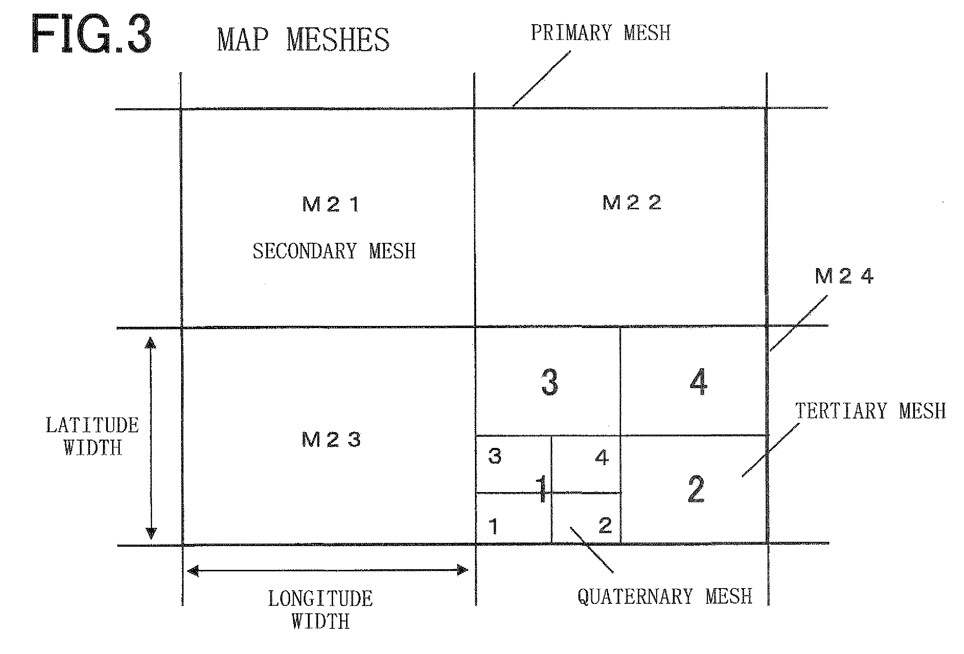

FIG. 3 is a diagram representing an outline of a configuration of map data. Normally, map data is sectioned into mesh form through partitioning by predetermined latitude and longitude into domains of prescribed size. For example, as shown in FIG. 3, secondary mesh map data with latitude width of 1/120 degree (30 seconds) and longitude width of 1/80 degree (45 seconds); primary mesh map data from linking of the equivalent of the four meshes, namely, the secondary meshes M30 to M34; tertiary mesh map data from respective four-fold division of the secondary meshes M30 to M34; and quaternary mesh map data from further four-fold division of tertiary mesh map data, is stored in a map database (for example, see FIG. 2, 32B). The primary mesh latitude width is 60 seconds and longitude width is 90 seconds; the tertiary mesh latitude width is 15 seconds and longitude width is 22.5 seconds; and the quaternary mesh latitude width is 7.5 seconds and longitude width is 11.25 seconds.

The secondary mesh latitude width is 30 seconds and longitude width is 45 seconds, the primary mesh latitude width is 60 seconds and longitude width is 90 seconds; the tertiary mesh latitude width is 15 seconds and longitude width is 22.5 seconds; and the quaternary mesh latitude width is 7.5 seconds and longitude width is 11.25 seconds. For example, a primary mesh is a wide area-map, a secondary mesh map is a medium-area map 1, a tertiary mesh map is a medium-area map 2, and a quaternary mesh map is a city map. Ordinarily, a city map is a narrow-range yet detailed map that includes small streets, while a wide-area map is a wide-range map centered on major streets such as arterial streets and the like. The map data of each mesh also includes data for major POI (for example, facilities such as train stations, hospitals, landmark buildings, and the like) residing with the mesh. Through adjustment of the level of detail of the map depending on mesh size, a needless increase in the amount of data included in a single map mesh may be avoided.

Specifically, the map data is composed of map meshes sectioned by predetermined latitude and longitude, and includes map data sectioned by ranking, from high-order mesh map data of the widest range of latitude and longitude to low-order mesh map data obtained through division of the higher order meshes into a predetermined number of divisions, with the street data included in the map data becoming progressively more detailed from high-order meshes to low-order meshes.

The individual route searching servers have this sort of map data, but there is no limitation to all of the route searching servers holding all of the map data from the primary meshes to the quaternary meshes. For example, there may be cases in which only a wide-area map is held for a mountainous section within the area B; or, for a city map, only major urban areas are held. The extent to which these map meshes are held by the route searching server 30A and the like will determine whether map data suited to a requested process can be displayed, or whether substitute map data is provided, during route searching, route guiding, and map display.

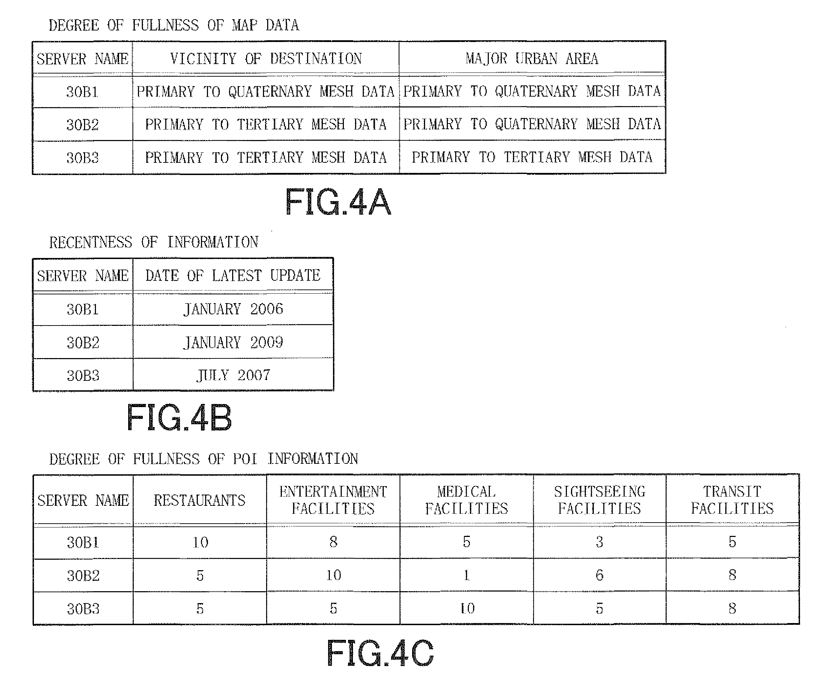

FIG. 4 is a drawing showing an example of detailed information of server-held data. In FIG. 4, FIG. 4A shows an example of detailed information of map data, FIG. 4B shows an example of update history of data, and FIG. 4C shows an example of detailed information of POI data.

FIG. 4A shows the degree of fullness of map data held by each of the route searching servers 30B1 to 30B3. According to FIG. 4A, the route searching server 30B1 holds respective primary mesh to quaternary mesh map data for the vicinity of a destination and major urban areas specified by a terminal device 20; the route searching server 30B2 holds primary mesh to tertiary mesh map data for the vicinity of a destination, and primary mesh to quaternary mesh map data for major urban areas; and the route searching server 30B3 holds respective primary mesh to tertiary mesh map data for the vicinity of a destination and major urban areas.

### (Detailed information of server-held data: date of update of information)

FIG. 4B shows the month of update of server-held data. According to FIG. 4B, the server-held data such as map data, POI data, route searching data, and the like of the route searching server 30B1 was updated in January of 2006; the server-held data such as map data, POI data, route searching data, and the like of the route searching server 30B2 was updated in January of 2009; and the server-held data such as map data, POI data, route searching data, and the like of the route searching server 30B3 was updated in July of 2007. Consequently, it will be appreciated that the route searching server 30B2 holds the newest server-held data.

### (Detailed information of server-held data: degree of fullness/amount of information of POI information)

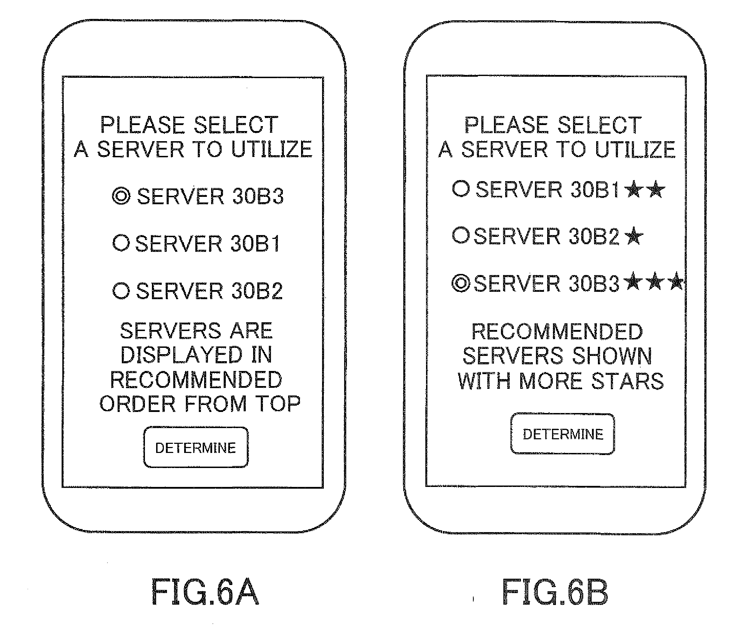

FIG. 4C is a drawing showing an example of information relating to POI within area B, held by the route searching servers 30B1 to 30B3. POI is sectioned, for example, into categories such as "restaurant," "entertainment facilities," "medical facilities," "sightseeing facilities," "transit facilities," and the like; FIG. 4C shows the numbers of POI held per category by the respective route searching servers 30B1 to 30B3. According to FIG. 6, the route searching server 30B1 is filled with the greatest amount of information of POI belonging to "restaurants," whereas the greatest amount of information of POI belonging to "entertainment facilities" and to "medical facilities" fills the route searching server 30B2 and the route searching server 30B3, respectively.

Various kinds of data make up server-held data apart from the data described in FIG. 4. For example, there is information such as street transit information, such as vehicle congestion information, intervals closed to traffic, or the like, in each of the streets; operating schedule information and train time schedule information of transit agencies; and the like; and the route searching server 30A may acquire similar detailed information for this server-held data as well.

In cases such as these where details differ in the server-held data of the plurality of route searching servers 30B1 to 30B3, it is preferable to prompt the route searching server that holds data suited to a process requested by a terminal device 20 to execute processing. Accordingly, in the present invention, because the target of a process received from the terminal device 20 (in this case, an area to which destination G belongs) is the area B, the route searching server 30A of the area A first acquires detailed information of the server-held data from the route searching servers 30B1 to 30B3 which designate the area B as their service provision area, and on the basis of the detailed information, calculates evaluation values of the server-held data of the route searching servers 30B1 to 30B3.

Specifically, in cases where details differ in the server-held data held by the route searching servers 30B1 to 30B3, when executing various types of processes from the terminal device 20, it is preferable for the route searching server 30A to solicit processes from route searching servers which have appropriate server-held data. In a case where the process requested by the terminal device 20 is route searching or route guiding, more appropriate service can be received by soliciting the process from a route searching server having server-held data with a high degree of fullness of map data and network data for route searching. In a case where the process requested by the terminal device 20 is a POI lookup process to look up desired POI, the process is more favorably solicited from a route searching server having server-held data with a high degree of fullness of POI information, or with a large amount of information. Also, to expect appropriate service, it will be necessary to select a route searching server with newly updated server-held data.

Accordingly, on the basis of the detailed information of the server-held data acquired from the route searching servers 30B1 to 30B3, the route searching server 30A calculates evaluation values assigning rankings to server-held data. Calculation of evaluation values is carried out as follows. Specifically, server-held data such as the degree of fullness of map data, the recentness of information, the degree of fullness/amount of information of POI information, and the like is ranked, for example, into 10 rankings in order of increasing degree of fullness, recentness, or amount of information; and undergo numeric conversion employing preset numerical values corresponding to the ranks, with the numeric values being added to arrive at overall evaluation values.

On the basis of the detailed information acquired from each of the route searching server 30B1 and the like, the server evaluating means 311A sets numerical values expressing predetermined ranking depending on the degree of fullness, the quantity of information, or the date of the latest update of the server-held data of each of the route searching server 30B1 and the like, and calculates evaluation values for each of the route searching server 30B1 and the like from the total thereof. For example, for map data of the server-held data, the server evaluating means 311A will calculate evaluation values for route searching servers that include more low-order mesh map data, which are higher than the evaluation values for other route searching servers.

Also, for route searching servers that have acquired detailed data having date-of-update information closer to the current date, the server evaluating means 311A calculates evaluation values which are higher than the evaluation values for other route guiding servers; or for route searching servers with either a greater number of the POI category classes or a greater quantity of POI information belonging to each of the categories, or both, the server evaluating means 311A will calculate evaluation values which are higher than the evaluation values for other route guiding servers.

Further, when the route guiding server 30A calculates evaluation values, in a case where a process request from a terminal device includes a data item considered to be important among specific server-held data, for a route guiding server having server-held data that corresponds to the given data item considered to be important, the server evaluating means 311A will calculate an evaluation value that is higher than the evaluation values for other route guiding servers. For example, in a case where a POI category (for example, medical facilities) has been set in a process request, the evaluation values of route guiding servers having server-held data with a greater quantity of POI information belonging to medical facilities will be set higher than the evaluation values for other route guiding servers. In so doing, evaluation values of route searching servers adapted to the process request of a utilizing individual can be set higher, and appropriate server selection can be promoted in user selection.

Once the evaluation values are calculated, the route guiding server 30A transmits server information composed of the server names and the evaluation values of the server-held data to the terminal device 20, and prompts selection of a desired server in the terminal device 20. Once a server is selected in the terminal device 20, the process request from the terminal device 20 is executed in the selected server.

In this manner, the route guiding server 30A having received the process request from the terminal device 20 judges the area targeted in the process request, as well as the route guiding server 30B1 and the like which designate said area as their service provision area; and in a case where there are a plurality of the route guiding server 30B1 and the like in question, acquires detailed information of the server-held data of the route guiding server 30B1 and the like, and evaluates the held data of each of the servers, whereupon the route searching server 30A transmits server information including said evaluation result to the terminal device 20 and prompts selection of a server in the terminal device 20, whereby through selection of a server with a high evaluation, the terminal device 20 requesting route guiding service in relation to a desired area can select an appropriate route guiding server depending on the request.

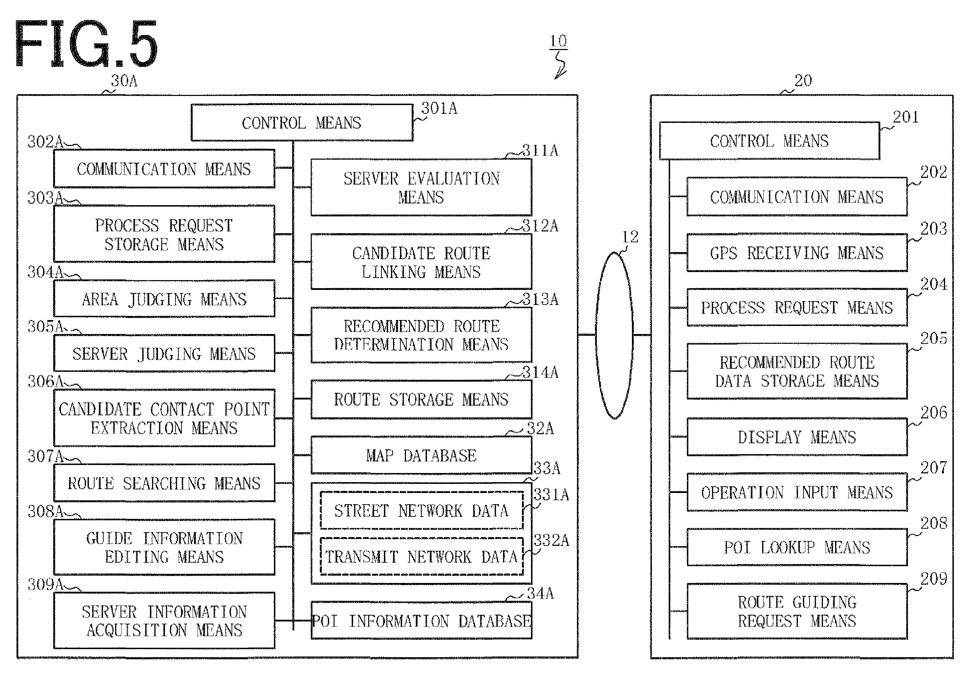

FIG. 5 is a block diagram representing a detailed configuration of a route guiding server and a terminal device. The terminal devices 20 and the route searching server 30a and the like designating respective areas as their service provision areas have configurations that are basically completely the same; here, the following description proceeds, illustrating only the route guiding server 30A designating the area A as its service provision area, and a terminal device 20.

The terminal device 20 is a terminal which can get navigation services and which is configured to comprise control means 201, communication means 202, GPS reception means 203, process request means 204, recommended route data storage means 205, display means 206, operation input means 207, POI lookup means 208, route guiding request means 209, and the like. The operation input means 207 is configured with character input keys, selection keys, cursor keys for selecting setting items and the like on menu screens displayed on a display screen, and the like.

The GPS reception means 203 has a GPS receiver, receives GPS satellite signals transmitted from a plurality of GPS satellites, and calculates the latitude and longitude of the current location to acquire the current location of the terminal device 20. On the basis of parameters and the like which have been set by employing the operation input means 207, or a menu screen displayed on the display means 206, the process request means 204 transmits a process request to the route guiding server 30A and the like. The process request can be a route searching process request, a map request including a desired point, a POI lookup request, or the like.

The result of the process request, for example, recommended route data received from the route guiding server 30A as a result of route searching, is stored in the recommended route data storage means 205, and the recommended route, together with map information, is displayed by the display means 206. The route guiding request means 209 can request the route searching server 30A for route guiding in accordance with the recommended route, and get guiding of the route, a direction to proceed, and the like. Also, the POI lookup means 208 can specify a desired POI category and request the route searching server 30A for POI lookup, and display a map, as well as displaying the resident location of the looked up POI, on the display means 206. Also, by designating the location of the looked up POI as the destination, route searching from a desired departure place to the POI can be requested.

As discussed previously, the route searching servers 30A, 308, 30B1 to 30B3, and the like have basically identical configurations, and in the following description, the constituent elements of the route guiding servers are represented by assigning like numerals and appending thereafter the letters A to N to show the servers. Constituent elements having identical designations have identical functions. The route guiding servers respectively comprise a map database 32A having compiled map data; a route searching network database 33A having compiled street network data 331A and transit network data 332A for route searching; and a POI information database 34A for compiling POI designations and location information.

In a case where the route searching server 30A searches for a walking route or one utilizing a public transit agency and guides a terminal device 20, the route searching server 30A employs the street network data 331A and the transit network data 332A to search for a route. Also, in a case where the route searching server 30A looks up POI and guides a terminal device 20, the route searching server 30A refers to the POI information database 34A and looks up the POI in question. Similarly, in a case where the route searching server 30A provides map data including a desired point requested by a terminal device 20, the route searching server 30A reads the map data in question from the map database 32A and provides it to the terminal device 20.

Also, the route searching server 30A is constituted to comprise control means 301A, communication means 302A, process request storage means 303A, area judging means 304A, server judging means 305A, candidate contact point extraction means 306A, route searching means 307A, guidance information editing means 308A, server information acquisition means 309A, server evaluation means 311A, candidate route linking means 312A, recommended route determination means 313A, route storage means 314A, and the like.

When the route searching server 30A receives from a terminal device 20 a process request such as route searching, POI lookup, a map request, or the like, on the basis of information included in the process request, the area judging means 304A discriminates an area necessary for processing. If the process request is targeted within the range of the service provision area A of the route searching server 30A, there is no need to consider other areas. In a case where a process request includes a target within the range of another area, the target area is judged. Judging of the area can be carried out on the basis of information included in the process request, for example, in a route searching request, information such as the departure place and destination or the like; in a map request, information of a point identifying a requested map; or in POI lookup, information such as the POI residence region.

Once the target area of the process request has been judged, the server judging means 305A judges the route searching servers 30A, 30B, and the like which designate that area as their service provision area, as well as judging whether a plurality of route searching servers exist in an identical area. Here, a case where the process request from the terminal device 20 is a route searching request, the departure place S is a point belonging to the area A, the destination G is a point belonging to the area B, and a plurality of route searching servers 30B1 to 30B3 exist in the area B (see FIG. 2) will be described.

Once the plurality of route searching servers 30B1 to 30B3 of the area B are judged by the server judging means 305A, the server information acquisition means 309A acquires the server names and detailed information of the server-held data from the respective searching servers 30B1 to 30B3. Once the server information acquisition means 309A has acquired the detailed information of the server-held data from each of the searching servers 30B1 to 30B3, the server evaluation means 311A calculates evaluation values for each of the servers on the basis of the detailed information of the server-held data, and ranks the servers depending on the evaluation values. Computation of evaluation values and ranking of servers was described previously.

While it is acceptable for the evaluation values to be fixed ones having been sorted into preset ranks according to the detailed information, and calculated employing preset numerical values according to rank, according to the process request of the terminal device 20, it is also acceptable to calculate evaluation values dynamically, by varying the numerical values which are imparted to ranks depending on the process request of the terminal device 20 in the route searching server 30A.

For example, in a case where the process request of the terminal device 20 is POI lookup in relation to "medical facilities," because the degree of fullness of "medical facilities" information and the quantity of information of POI information are important elements, the configuration can be one whereby numerical values are set in such a way that this is appreciably reflected in the ranks for calculating the evaluation values. In this case, because the server-held data of the route searching server 30B3 is evaluated as being the most suited to the request, ranks are assigned such that the route searching server 30B3 rises to the highest order, so that the user can be made to select the route searching server 30B in question.

Various methods can be adopted for calculating the evaluation values. For example, it is acceptable for evaluation values to be calculated employing numeric values showing rank. Further, the configuration can be one whereby the detailed information of the server-held data shown by way of example in FIG. 4 is expressed as numeric values showing rank, and the detailed information of the server-held data is provided to the route searching server 30B, using those numeric values.

Once evaluation of each of the route searching servers 30B1 to 30B3 has been completed, the route searching server 30A transmits server information composed of the server names and the evaluation values of the server-held data to the terminal device 20, and prompts selection of a desired server in the terminal device 20. FIG. 6 is a drawing showing an example of a server selection screen displayed by the display means of a terminal device 20 on the basis of server information received from the route searching server 30A; FIG. 6A shows an example of servers recommended for selection by the user, displayed in order of higher evaluation values, and FIG. 6B shows an example of a screen displaying stars that show the magnitude of evaluation values, paired with server names. In FIG. 6, the evaluation value of the route searching server 30B3 is the greatest, and it is the recommended server.

When any one of the displayed route searching servers 30B1 to 30B3 is selected and the "Determine" button is operated, the server is determined. When the route searching server 30A takes the server selection result from the terminal device 20, the selected route searching server is solicited with a request for a process. The selection screens of FIG. 6A and FIG. 6B show an example in which the route searching server 30B3 was selected. In the following description, it is assumed that the route searching server 30B was selected in the terminal device 20.

Search parameters and the like included in the route searching request sent from the terminal device 20 to the route searching server 30A are initially stored in the process request storage means 303A. The area judging means 304A judges whether the departure place and the destination included in the route searching request parameters stored in the process request storage means 303A are points within the service provision area of the route searching server 30A.

In a case where the departure place and the destination are points within the service provision area of the route searching server 30A, the route searching means 307A refers to the route searching network database 33A in accordance with the route searching parameters included in the route searching request and carries out normal route searching from the departure place to the destination; and stores a plurality of searched candidate routes in the route storage means 314A. The recommended route determination means 313A then determines an optimum route, and distribution data for the terminal device 20 is edited by distribution data editing means 315A then sent to the terminal device 20 by the communication means 302A. This process is similar to the route searching process in an ordinary route searching system.

In a case where the departure place S is within the area A and the destination G is a point outside the area A and within the area B, the route searching server 30A solicits the route searching server 30B3 of the selected area B for route searching to the destination G within the area B, and by the procedure described below determines a recommended route connecting the area A and the area B, then transmits said recommended route information to the terminal device 20 and carries out route guiding.

First, with regard to the route searching server 30A, in a case where the destination G is a point outside the area A and within the area B, the candidate contact point extraction means 306A searches for a travel means link connecting the area A and the area B, and extracts one or a plurality of candidate contact points P1 to P3. Next, the route searching means 307A searches for optimum routes (routes that minimize the total link cost of the route) from the departure place S to the respective candidate contact points P1, P2, P3, designating these as candidate routes SP1, SP2, SP3 and deriving the total link cost (required time) thereof. Information about each of the candidate contact points and the candidate routes is stored temporarily in the route storage means 314A.

The route searching server 30A sends point information of the destination G, point information of the candidate contact points P1 to P3, and the required time of the candidate routes to the selected route searching server 30B3 which designates the area B in which the destination G is located as its service provision area. On the basis of the point information of the candidate contact points P1 to P3 and the point information of the destination G, the route searching server 30B3 searches for optimum routes (routes that minimize the total link cost of the route) from the respective candidate contact points P1 to P3 to the destination G, and searches for candidate routes P1G, P2G, P3G.

Through the agency of the candidate route linking means 312B, the route searching server 30B3 links (adds up), at each of the candidate contact points P1 to P3, the total link costs (required times) of the candidate routes SP1, SP2, SP3 that were searched by the route searching server 30A to the total link costs (required times) of each of the candidate routes P1G, P2G, P3G, whereupon the recommended route determination means 313 determines as a recommended route an optimum route that minimizes the total link cost (the sum of the required times) of the route from the departure place S to the destination G. By way of an example, the following description relates to a case where the total link cost (the sum of the required times) is minimized by the candidate route SP2 and the candidate route P2G which are linked at the candidate contact point P2.

The route searching server 30A which designates the area A as its service provision area may judge whether it is possible for the terminal device 20 to roam within the area B, and transmit roaming enabling/disabling information to the route searching server 30B3 during solicitation for route searching. Once the optimum route P2G is determined in the aforedescribed manner, on the basis of the roaming enabling/disabling information received from the route searching server 30A, the route searching server 30B3 of the area B determines a data editing process for the optimum route P2G. In a case where it is possible for the terminal device 20 to roam within the area B, the route searching server 30B3 transmits to the route searching server 30A information about the link cost of the optimum route P2G from the candidate contact point P2 to the destination G, and link information for the purpose of accessing this route information. Because the terminal device 20 can get detailed route information during travel within the area B, if link information is transmitted to the route searching server 30A, route guiding information and map data are transmitted from the route searching server 30B3 to the route searching server 30A only when there is a user request, and transmission of unnecessary data can be prevented.

In a case where it is not possible for the terminal device 20 to roam in the area B, the route searching server 30B1 judges whether it is possible to output map data of the area B to the route searching server 34A of the area A. Then, in a case where output of map data is possible, the route searching server 30B3 transmits the map data and the route guiding information from the candidate contact point P2 to the destination G to the route searching server 30A. The route searching server 30A transmits to the terminal device 20 the map data and the route guiding information of the optimum route P2G which were received from the route searching server 30B3, together with the map data and the route guiding information of the route SP2 from the departure place S to the candidate contact point P2 which were route-searched in the route searching server 30A. It is acceptable for the route searching server 30A to transmit to the terminal device 20 only link information for acquiring map data and route guiding information, and to transmit it to the terminal device 20 in a case where there has been a map data request based on the link information in the terminal device 20.

In cases where output of map data is not possible for reasons such as legal restrictions on output of map data and the like, the route searching server 30B3 edits the map data and the route information of the route P2G from the candidate contact point P2 to the destination G into text data format for transmission to the route searching server 30A. This text data is more detailed than the route guiding information that is transmitted in cases where roaming is possible. The route searching server 30A transmits to the terminal device 20 the text data of the optimum route P2G received from the route searching server 30B3, together with the map data and the route guiding information of the route SP2 from the departure place S to the candidate contact point P2, which were route-searched in the route searching server 30A.

In the aforedescribed description, there was described a case where determination of a recommended route was carried out in the route searching server 30B3 of area B, but the present invention is not limited thereto; it is acceptable as well for the route searching server 30B3 to simply return link costs to the respective routes P1G to P3G as route searching results to the route searching server 30A, and to carry out determination of a recommended route in the route searching server 30A. In this case, the route searching server 30B3 is notified of the determined recommended route, and route guiding information, map information, and text data according to the recommended route is transmitted from the route searching server 30B3 to the route searching server 30A.

Also, when on the basis of point information of the destination G received from the route searching server 30A, the route searching server 30B3 has extracted a candidate contact point PX that differs from the candidate contact points P1 to P3 which were extracted by the route searching server 30A, it should send point information of the candidate contact point PX to the route searching server 30A; issue a request for supplemental searching for an optimum candidate route from the departure place S to the candidate contact point PX; acquire the link cost (required time) of that candidate route from the route searching server 30A; and at the time of the determination of the recommended route in the route searching server 30A, add this new candidate route to the other candidate routes and carry out a final recommended route determination.

Here, the candidate contact point shown in FIG. 2 is shown as a given specific point, but in a case where the area A and the area B are adjacent by land, and the travel means is a car or a railway, there will be some cases where the candidate contact point connecting the area A and the area B is a point at the area border, and can be identified as point information of a candidate contact point as shown by P1 to P3 of FIG. 2, and other cases in which it is not.

For example, in a case of a route employing a plane or a route employing a ship as travel means between areas, the candidate contact points are the node to the area A side and the node to the area B side, which are the nodes to either end of the link connecting the areas and having a plane or ship as the travel means. In a case where, as in FIG. 2, the departure place S is in the area A while the destination G is in the area B, the point information of the candidate contact point sent from the route searching server 30A on the area A side to the route searching server 30B1 on the area B side will be the airport or harbor serving as the destination-side node of the plane link or ship link, whereas the point information of the candidate contact point of the route searching server 30A on the area A side will be the airport or harbor serving as the departure place-side node of the plane link or ship link. In this case, the required time of the plane link or ship link will naturally be added to the total cost of the recommended route.

In the route searching server 30A, in order to identify the destination G located within the range of the area B which is provided with service by the route searching server 30B3, it is necessary to identify the location information of the destination G in the route searching server 30A. In this case, there is no need for the route searching server 30A to hold map data for the area B, and a configuration for POI lookup of city names, noted facility names, and the like within the range or area B, and acquisition of location information thereof is acceptable. The POI information can be acquired from the POI information distribution server 50 (see FIG. 1) and compiled in the POI information database 34A.

As POI information of areas other than the area A and of foreign countries, the POI information database 34A of the route searching server 30A includes information about principal facilities such as airports, harbors, and the like, and therefore the route searching server 30A can extract airports and ports in the vicinity of the specified destination G as candidate contact points.

Here, an ordinary method for searching for routes that include travel routes by transit agencies is described. In the route searching network databases 33A, 33B of the respective route searching servers 30A, 30B there are compiled street network data 331A, 331B for searching for travel routes by walking or by car, and transit network data 332A, 332B for searching for travel routes utilizing public transit agencies. The respective route searching means 307A, 307B refer to these route searching network databases 33A, 33B to search for routes by walking or car, or routes involving a combination of walking and transit agencies.

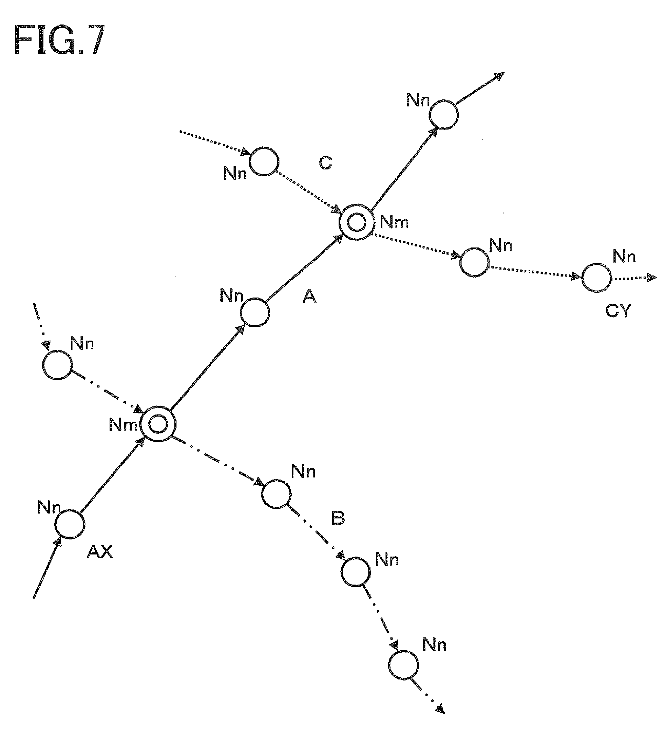

The street network data 331A, 331B are configured as follows. For example, in a case where the streets are composed of streets A, B, and C as shown in FIG. 7, designating end points, intersection points, inflection points, and the like of the streets A, B, and C as nodes, and expressing streets that tie together each of the nodes as directional links, the data is constituted by node data (node latitude and longitude), link data (link number), and link cost data made up of data of link costs (link distance or required time necessary to drive through a link) of each of the links.

Specifically, in FIG. 7, Nn (the ○ symbols) and Nm (the ⊚ symbols) show nodes, and Nm (the ⊚ symbols) show intersection points of streets. The directional links which tie together nodes are shown by arrow lines (solid lines, dotted lines, double-dot and dash lines). Among the links, there exist links that point in respective inbound and outbound street directions; in FIG. 7, however, in order to simplify illustration, only links of pointing arrows are illustrated.

In cases where route searching is carried out with data of such a street network as the database for route searching, links that join a departure place node to a destination node are tracked, the link costs thereof are accumulated, and a route that minimizes the cumulative link cost is searched and guided. Specifically, in a case of carrying out route searching with node AX as the departure place and node CY as the destination in FIG. 7, link costs are accumulated through sequential tracking of links when driving along the street A from the node AX, and turning right into the street C at the second intersection point to reach the node CY; and a route that minimizes the cumulative value of link costs is searched and guided.

In FIG. 7, other routes from the node AX to the node CY are not illustrated, but in actual practice such routes do exist, and therefore a plurality of possible routes from the node AX to the node CY are searched in similar fashion; and among these routes, a route that minimizes link cost is designated as the optimum route. This is carried out, for example, by a known method called the Dijkstra method.

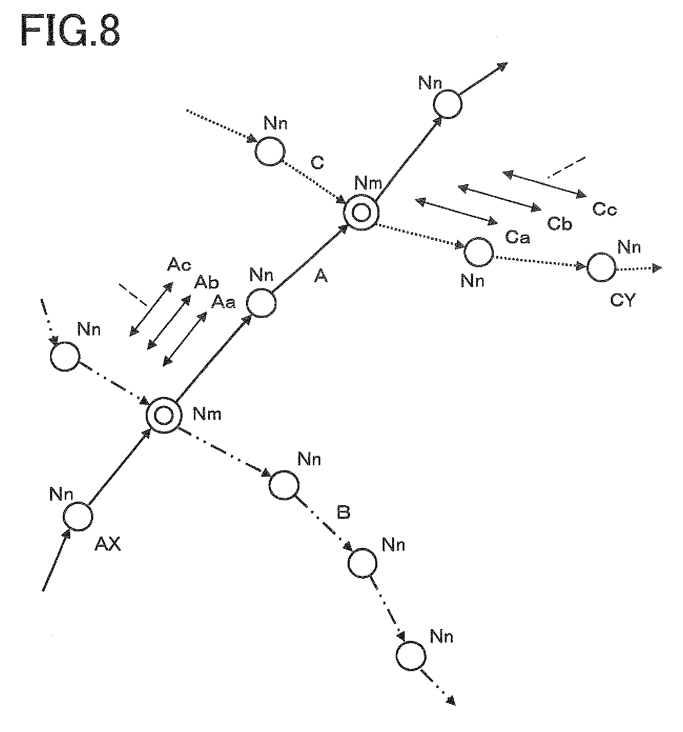

In contrast to this, the transit network data 332A, 332B for route searching of transit agencies are configured as follows. For example, in a case where the transit lines are composed of transit lines A, B, and C as shown in FIG. 8, designating each of the train stations (or each of the airports in the case of a plane line) furnished on each of the transit lines A, B, and C as nodes, and expressing intervals that tie together each of nodes as directional links, node data (latitude and longitude) and link data (link number) are designated as network data. In FIG. 8, Nn (the 0 symbols) and Nm (the ⊚ symbols) show nodes, and Nm (the ⊚ symbols) show connection points (transfer stations and the like) of transit lines, while the directional links which tie together nodes are shown by arrow lines (solid lines, dotted lines, double-dot and dash lines). Among the links, there exist links that point in respective inbound and outbound transit line directions; in FIG. 8, however, in order to simplify illustration, only links of pointing arrows are illustrated.

However, the link costs of the transit network are basically different as compared with those of the street network. Specifically, in the street network, link costs are fixed and static, whereas in the transit network, as shown in FIG. 8, there are a plurality of trains and planes operating on transit lines (hereinbelow, routes of individual trains, planes, and the like are termed "transit means"). Times of departure from nodes and times of arrival at the next node in every transit means are defined (stipulated by time schedule data and operating data), and moreover there are cases in which individual routes do not always link to adjacent nodes. An example would be a case of an express train versus one that stops at each station. In such cases, a plurality of different links will exist on an identical transit line, and in some cases the required time between nodes will differ by transit means as well.

In the transit network shown by way of example in FIG. 8, a plurality of transit means (routes) Aa to Ac ... exist on the identical transit line A, and a plurality of transit means (routes) Ca to Cc ... on the identical transit line C. Consequently, the operating networks of transit agencies differ from those of simple street networks in that data of nodes, links, and link costs involves an amount of data that is proportional to the total number of transit means (routes of individual planes, trains, and the like). Because of this, transit network data involves an enormous amount of data as compared with the amount of data of the street network.

In order to search for a route from a given departure place to a given destination using such transit network data, it is necessary to search for all transit means that can be used (ridden) when coming from the departure place to the destination, and to identify transit means that meet the search parameters.

For example, in FIG. 8, in a case where a given specific departure time is specified from a departure place at the node AX of the transit line A and route searching to a destination at the node CY of the transit line C is carried out, of the transit means Aa to Ac ... operating on the transit line A, all of the transit means departing at or after the departure time are selected as routes with sequential departure times. Then, based on the arrival time at the connecting node to the transit line C, of the transit means Ca to Cc ... operating on the transit line C, all combinations of transit means departing at or after a departure time such that boarding is possible at the connecting node are searched; and the required time of each of the routes, the number of transfers, and the like are accumulated for guiding.

Utilizing this network data, the route searching servers 30A, 30B search for a plurality of candidate routes from the departure place to the destination in accordance with route searching parameters, and designate the results as candidate routes. In a case where the route searching parameters specify a departure time from the departure place, an arrival time at the destination will be included in the route guiding data; or in a case where an arrival time at the destination is specified, a departure time from the departure place in order to arrive at the destination at the specified time will be included.

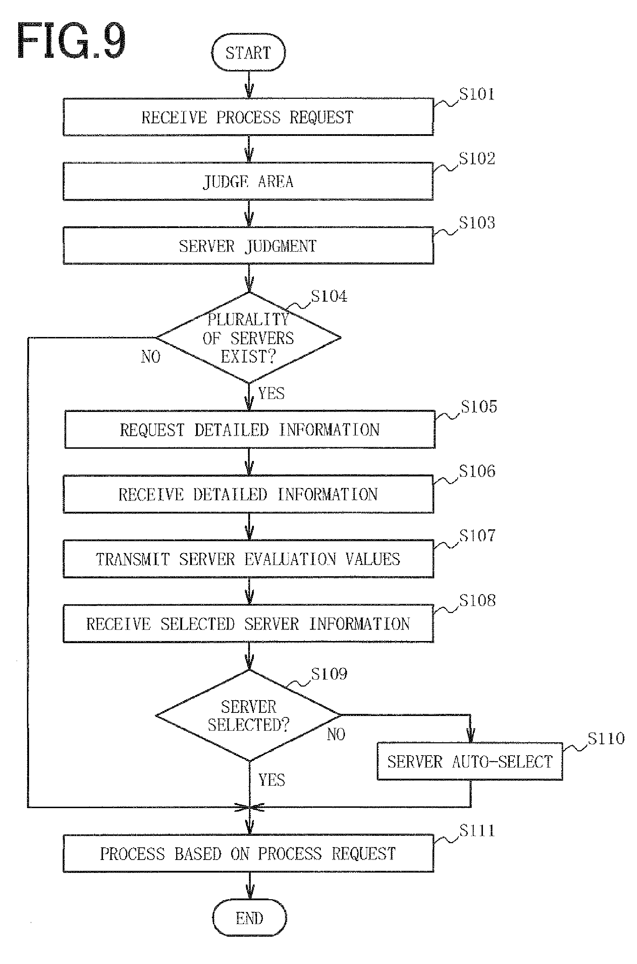

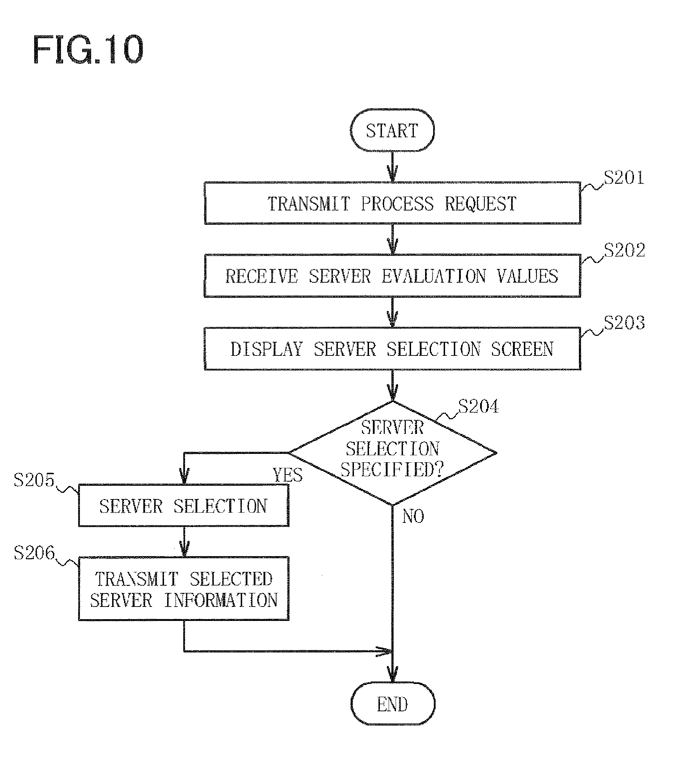

Next, the operational procedure of the route guiding system according to the present invention is described in detail referring to the flowcharts of FIG. 9 and FIG. 10. FIG. 9 is a flowchart depicting the operational procedure of the route searching server 30A which designates the area A shown in FIG. 2 as its service provision area, and FIG. 10 is a flowchart depicting the operational procedure of a terminal device 20.

In Step S101, the route searching server 30A receives a process request, such as route searching, POI lookup, a map request, or the like, from a terminal device 20. In Step S102, on the basis of information such as a departure place, a destination, or the like included in a process request, information of a point identifying a requested map in a map request, or information such as a POI resident region or the like in POI lookup, the area judging means discriminates an area necessary for processing. In the preceding example (see FIG. 2), because the departure place S is a point belonging to the area A and the destination G is a point belonging to the area B, the area A and the area B are judged to be areas relating to the process.

Next, in Step S103, the server judging means 305A judges the route searching servers 30A, 30B and the like designating the judged area as their service provision area. In the example of FIG. 2, the server judging means judges the route searching server 30A designating the area A as its service provision area, as well as the route searching servers 30B1 to 30B3 designating the area B as their service provision area, to be the servers necessary for the process. Next, in Step S104, the server judging means 305A judges whether a plurality of route searching servers exist in an identical area. If a plurality of route searching servers do not exist in an identical area, the process advances to Step S110, and the route searching server 30A executes the process requested by the terminal device 20.

In the example of FIG. 2, because a plurality of route searching servers 30B1 to 30B3 exist in the area B, the judgment result is "YES," and in Step S105 the server information acquisition means 309A requests each of the route searching servers 30B1 to 30B3 for transmission of detailed data of their respective server-held data, and in Step S106 receives the detailed data of the respective server-held data. Once the detailed data of the server-held data is received, in Step S107, the server evaluation means 30 calculates evaluation values of each of route searching servers 30B1 to 30B3, and transmits the server names and the evaluation values as server selection information to the terminal device 20. The method of calculating the evaluation values is as described previously. Once the route searching server 30A sends the server information, it waits for server selection in the terminal device 20. The terminal device 20 displays the server selection screen shown in FIG. 6 and carries out server selection by the user.

In Step S108, the route searching server 30A receives selected server information from the terminal device 20. In Step S109, it is judged whether a server has been selected in the terminal device 20. If a server has not been selected, the route searching server 30A carries out server auto-selection in Step S110. In server auto-selection, the server with the highest evaluation value (in the example of FIG. 6, the route searching server 30B3) is selected. On the other hand, if a server has been selected, the routine advances to the process of Step S111, and using the selected server, the route searching server 30A carries out processing based on the process request of the terminal device 20 that was received in Step S 101.

Meanwhile, the processing procedure of the terminal device 20 is shown in FIG. 10. First, using the operation input means 207, the POI lookup means 208, menu screens displayed by the display means 206, and the like, the terminal device 20 sets predetermined parameters necessary for a process request such as route searching, POI lookup, a map request, or the like. Based on the set parameters, in the process of Step S201, the process request means 204 transmits a process request to the route searching server 30A, and the terminal device 20 waits for a response from the route searching server 30A. When the terminal device 20 receives server information (server names, server evaluation values) from the route searching server 30A in Step S202, in Step S203, the information is displayed on the server selection screen (see FIG. 6) of the display means 206.

In Step S204, the terminal device 20 judges whether specification of a server selection has been made on the server selection screen. In a case where a server selection specification has been made, in the process of Step S205, the server selection made by the server selection specification is finalized; and in Step S206 the terminal device 20 transmits the selected server information to the route searching server 30A and terminates the process, then transitions to the procedure of the process request that was transmitted to the route searching server 30A. On the other hand, if no server selection specification has been made within a predetermined time, the terminal device 20 terminates the process, and then transitions to the procedure of the process request that was transmitted to the route searching server 30A.

The preceding description described an example of a case where the process request transmitted by the terminal device 20 to the route searching server 30A is a request necessitating a process targeting the area B (for example, a route searching request in which the departure place belongs to the area A and the destination belongs to the area B), and a plurality of route searching servers 30B1 to 30B3 exist within the area B. However, the present invention is not limited to this; it can also be implemented in a case where the process request transmitted by the terminal device 20 to the route searching server 30A designating the area A as its service provision area is a request necessitating a process targeting the area A (for example, a POI lookup request of a desired category within the area A), and there are other route searching servers besides the route searching server 30A within the area A.

In this case, the route searching server 30A which received the process request from the terminal device 20 judges whether other servers are present within area A, and in a case where other servers are present, acquires detailed information of the server-held data from these other servers, whereupon the route searching server 30A calculates evaluation values for each of the servers inclusive of itself, and prompts the terminal device 20 for server selection. In the case where another server is selected in the terminal device 20, the terminal device 20 re-transmits the process request to the other selected server, and the route searching server 30A terminates the process. A configuration whereby the process request of the terminal device 20 is forwarded from the route searching server 30A to the other server is also acceptable.

### [Example 2]

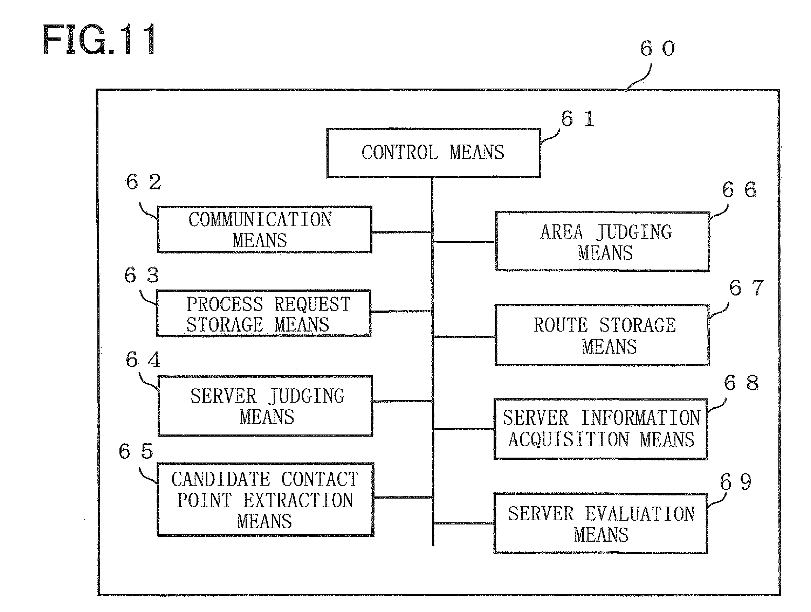

Whereas the route guiding system described previously is an example in which the route searching servers which provide service to each of the areas work cooperatively in processes, comparable processes can be carried out via a route guiding mediation server. FIG. 11 is a block diagram representing a configuration of a route guiding mediation server 60 furnished to a route guiding system 10 according to Example 2.

The route guiding mediation server 60 shown in FIG. 11 is connected via a network to the route guiding system 10 shown in FIG. 1, and is adapted to get route searching mediation requests from each of the route searching servers 30A, 30B, and the like; to identify the route searching servers necessary for route searching or route guiding; and to mediate process requests such as route searching requests and the like, and provide a requester with the results of route searching. Here, operation of the route guiding mediation server 60 will be described by way of an example of a case where a process taking place between the route searching server 30A and the route searching servers 30B and the like, described with reference to FIG. 2 and FIG. 5, is executed via the route guiding mediation server 60. In the following description, as in Example 1, there is described an example of a case in which a route searching request (process request) setting a departure place S belonging to the area A and a destination G belonging to the area B is transmitted from a terminal device 20 to the route searching server 30A of the area A.

As shown in FIG. 11, the route guiding mediation server 60 is configured to comprise control means 61, communication means 62, process request storage means 63, server judging means 64, candidate contact point extraction means 65, area judging means 66, user information storage means 67, server information acquisition means 68, server evaluation means 69, and the like. The control means 61 comprises a microprocessor, ROM, and RAM, not shown, and controls operation of each of the sections. The communication means 62 is an interface for transmission and reception of information to and from the first route searching server 30A, the second route searching servers 30B, and the like, via the network.

In the following description, there is described an example of a case in which a terminal device 20 sets route searching parameters specifying a point within an area A as the departure place S and a point within an area E as the destination G, and solicits the route searching server 30A on the departure place S side for route searching in consideration of a stopover area; while the route searching server 30A requests the route guiding mediation server 60 to mediate route searching and route guiding.

At the beginning, the terminal device 20 transmits a process request such as route searching, POI lookup, a map request or the like, to the route searching server 30A. Upon receiving this process request, the route searching server 30A transmits it to the route guiding mediation server 60. With the area judging means 66, the route guiding mediation server 60 discriminates areas necessary for processing, doing so on the basis of information included in the process request. If the process request is targeted within the range of the service provision area A of the route searching server 30A, there is no need to consider other areas. In a case where the process request includes a target within the range of another area, the target area is judged. Judging of the area can be carried out on the basis of information included in the process request, for example, in a route searching request, information such as the departure place and destination or the like; in a map request, information of a point identifying a requested map; or in POI lookup, information such as the POI residence region.

Once the target area of the process request has been judged, the server judging means 64A judges the route searching servers 30A, 30B, and the like, which designate that area as their service provision area, as well as judging whether a plurality of route searching servers exist in an identical area. Here, a case where the process request from the terminal device 20 is a route searching request, the departure place S is a point belonging to the area A, the destination G is a point belonging to the area B, and a plurality of route searching servers 30B1 to 30B3 exist in the area B (see FIG. 2) will be described.

Once the plurality of route searching servers 30B1 to 30B3 of the area B are judged by the server judging means 64A, the server information acquisition means 68 acquires the server names and detailed information of the server-held data from the respective searching servers 30B1 to 30B3. Once the server information acquisition means 68 has acquired the detailed information of the server-held data from each of the searching servers 30B1 to 30B3, the server evaluation means 69 calculates evaluation values for each of the servers on the basis of the detailed information of the server-held data, and ranks the servers depending on the evaluation values. Computation of evaluation values and ranking of servers takes place by a procedure comparable to that described in Example 1.

Once evaluation of each of the route searching servers 30B1 to 30B3 has been completed, the route guiding mediation server 60 transmits server information composed of the server names and the evaluation values of the server-held data to the route searching server 30A. The route searching server 30A then transmits the server information that was received from the route guiding mediation server 60 to the terminal device 20. The terminal device 20 having received the server information displays a server selection screen comparable to that described in Example 1, prompting the user to select a desired server. Here, the route searching server 30B has been selected. The route searching server 30A receives server selection information from the terminal device 20, and transmits the information of the selected route searching server 30B3 to the route guiding mediation server 60.

Also, during transmission of the server selection information to the route guiding mediation server 60, the route searching server 30A, acting on the basis of the route searching parameters including the departure place S and the destination G from the terminal device 20, judges whether the destination G included in said route searching parameters is point information existing within the area A, which is its home area.

In a case where the destination G is judged to be point information within the home area, the route searching server 30A carries out normal route searching, determines a recommended route (optimum route) in relation to the obtained candidate routes, and on the basis thereof edits the route guiding data, and transmits route information and route guiding information to the terminal device 20. The terminal device 20 displays the route information and route guiding information received from the route searching server 30A on the display means. Because the process in this case is completed by the route searching server 30A alone, solicitation of mediation of the process by the route guiding mediation server 60 is not necessary.

On the other hand, in a case where the destination is judged not to be point information within the home area, the candidate contact point extraction means 306A extracts all of the candidate contact points within its home area, and on the basis of the extracted candidate contact points, the route searching means 307a carries out route searching to each of the candidate contact points from the departure place S. Candidate route information that includes a predetermined number of candidate routes obtained through route searching, and required times relating to the candidate routes, is transmitted together with the destination G information (destination G location information) and the candidate contact point information, in the form of a route searching mediation request to the route guiding mediation server 60 via the communication means 302A. During this time, information of the server selected by the above-described process; i.e., information of the route searching server 30B3, is transmitted to the route guiding mediation server 60.

The route searching mediation request (process request) including the information of the destination, candidate contact points, candidate routes, and the like received from the route searching server 30A is stored in the process request storage means 63 by the route guiding mediation server 60; the ID of the terminal device 20, together with the aforedescribed route searching mediation request, are also stored in the process request storage means 63. The area judging means 66 has judged which service provision area the destination G belongs to in the above-described process, and the route searching server 30B3 of the area in question has been selected by the terminal device 20. The candidate point extraction means 65 comprises a database of connection point information, and on the basis of the area B judged by the area judging means 66 and to which the destination G belongs, and the area of the route searching server 30A, extracts contact points (P1 to P3 in FIG. 2) that connect the area A and the area B.

Next, the route guiding mediation server 60 transmits to the route searching server 30B3 route information leading to the extracted candidate contact points on the area A side (information about an optimum route to each of the candidate contact points in question within the area A from the departure place S searched by the route searching server 30A), and point information for the destination G. In the route searching server 30B3, on the basis of the received candidate route information and the point information for the destination G1, the route searching means searches for optimum routes to the destination G1 from each of the candidate contact points (P1 to P3 in FIG. 2) included in the candidate route information, designating these as candidate routes. On the basis of each of the candidate routes obtained as a result of route searching, and the candidate route information received from the route guiding mediation server 60 (the required times of the candidate routes from the departure place S to the candidate contact points P1 to P3), the recommended route determination means determines a recommended route (optimum route) minimizing the total required time.

On the basis of the route data of a candidate route P2G within the area B, the route searching server 30B creates route guiding information, and creates link information for the terminal device 20 to access this route guiding information. The created link information, together with information showing that the route constituted by the candidate route SP2 and the candidate route P2G is the recommended route, is transmitted to the route guiding mediation server 60. The route guiding mediation server 60 transmits this information to the requesting route searching server 30, whereupon the route searching server 30 transmits this information to the terminal device 20.

When the terminal device 20 thusly receives from the route searching server 30A the recommended route information, the route guiding information within the area A and link information for linking to said route guiding information, and the route guiding information within the area B and link information for linking to said route guiding information, on the basis of the link information, the terminal device 20 accesses the route guiding information for the respective areas, and requests route guiding from the route searching server 30A and the route searching server 30B.

In cases where the area to which the departure place S belongs and the area to which the destination G belongs are different, and the route searching server which designates the area to which the destination G belongs as its service provision area (for example, the route searching server 30B in FIG. 2) is solicited to search for candidate routes within the area B, there may arise a case in which the application program of the navigation process which employs the route searching server designating the area to which the departure place S belongs as its service provision area (for example, the route searching server 30A in FIG. 2) are respectively different applications.

In such a case, a configuration whereby the route searching server 30A carries out area judging and server judging; during acquisition of server information on the basis thereof, acquires information relating to the navigation application which the route searching server 30B of the area B is using; and judges whether the application matches the application of the route searching server 30A. When the navigation applications do not match, the route searching server 30A may then download from the route searching server 30B the navigation application employed in the route searching server 30B, and transmit the application to the terminal device 20.

If the terminal device 20 has acquired beforehand the application being used by the route searching server 30B, when the terminal device 20 is located within the area A, it can request route guiding from the route searching server 30A and get route guiding for the recommended route segment within the area A; whereas when the terminal device 20 travels between areas and is located within the area B, it can request route guiding from the route searching server 30B and get route guiding for the recommended route segment within the area B.

When the navigation applications differ in this way, if the application acquired from the route searching server 30B has been transmitted beforehand to the terminal device 20, even in cases where the terminal device 20 cannot roam in the area B, while still within the area A the terminal device 20 can acquire beforehand the application being used by the route searching server 30B. In cases where roaming of the terminal device 20 in the area B is possible, the terminal device 20 can acquire the application being used by the route searching server 30B, even after having traveled to the area B. Consequently, the route searching server 30A should judge whether roaming of the terminal device 20 is possible in the area judged by the area judging means (here, the area B), and decide whether to download the aforedescribed application.

As shall be apparent, this process can be implemented in Example 1, and can be executed as well in a route guiding system that uses a route guiding mediation server 60 as in Example 2. In this case, a configuration whereby the area judging means 66 or the server judging means 64 of the route guiding mediation server judges whether roaming within the area B is possible for the terminal device 20 which transmitted a process request to the route searching server 30A, and whether the navigation application of the route searching server 30A matches the navigation application of the route searching server 30B and the like.

### INDUSTRIAL APPLICABILITY

As described in detail hereinabove, the route guiding system according to the present invention can be favorably implemented in a route guiding system for providing route guiding services, such as route searching or route guiding, map information, points of interest (POI) information guiding, or the like within predetermined areas; and, in cases where, in every one of a number of areas which are countries or regions, there exists a system providing a route guiding service within said area, and a plurality of route guiding servers having compiled information of respectively different levels within a predetermined area, a terminal device requesting a route guiding service in relation to a desired area can select an appropriate route guiding server, depending on the request.

## Claims

1. A route guiding system made of route guiding servers for which a predetermined area is designated as a service provision area, and in which map data within the predetermined area, street network data and transit network data of said area for use in route searching, and POI data are server-held data; and a terminal device connected to the route guiding servers via a network, wherein individual route searching servers, on the basis of a process request requested by the terminal device, work cooperatively with one another, refer to the contents-held data, and execute the requested process; the route guiding system **characterized in that**
the route guiding servers comprise area judging means, server judging means, server information acquiring means, and server evaluating means; and the terminal device comprises server selecting means for selecting one of the plurality of route guiding servers on the basis of server information received from the route guiding servers;
the route guiding server that receives the process request from the terminal device judges, through the agency of the area judging means, an area subjected to processing in said process request; the server judging means judges a route guiding server designating the area that was judged by said area judging means as the service provision area ; in a case where there exist a plurality of route guiding servers for which an identical area is designated as the service provision area, the server information acquiring means acquires detailed information relating to the server-held data from the given plurality of route guiding servers; and, on the basis of the detailed information, the server evaluating means sets, as an evaluation value, a numerical value expressing a predetermined ranking according to any one or plurality of the degree of fullness, the quantity of information, and the date of the latest update of the server-held data of each of the route guiding servers, calculates the evaluation value of each of the route guiding servers from the total of the evaluation values, and transmits server information including the evaluation values to the terminal device; and
the terminal device, on the basis of the server information received from the route guiding server, selects one of the plurality of route guiding servers through the agency of the server selecting means, and notifies the route guiding server of the selected route guiding server.

2. The route guiding system according to claim 1 **characterized in that** the map data is made of a map mesh sectioned by predetermined latitude and longitude, and includes map data sectioned by ranking, from high-order mesh map data of the widest range of latitude and longitude to low-order mesh map data obtained through division of the higher order meshes into a predetermined number of divisions; and the server evaluating means calculates, for a route guiding server including more of the low-order mesh map data in the server-held data, an evaluation value that is higher than the evaluation values for other route guiding servers.

3. The route guiding system according to claim 1 **characterized in that** the detailed information of the server-held data includes date-of-data-update information; and the server evaluating means calculates, for a route guiding server that has acquired detailed information having date-of-update information closer to the current date, an evaluation value that is higher than the evaluation values for other route guiding servers.

4. The route guiding system according to claim 1 **characterized in that** the POI data includes POI category classes and POI information belonging to the respective POI category classes; and the server evaluating means calculates, for a route searching server having either or both of a greater number of the POI category classes or a greater quantity of POI information belonging to each of the categories, an evaluation value that is higher than the evaluation values for other route searching servers.

5. The route guiding system according to any of claims 1 to 4 **characterized in that** in a case where a process request from the terminal device includes a data item considered to be important among specific server-held data, the server evaluating means calculates, for a route searching server having server-held data that corresponds to the given data item considered to be important, an evaluation value that is higher than the evaluation values for other route guiding servers.

6. A route guiding server constituting a route guiding system which is made of route guiding servers for which a predetermined area is designated as a service provision area, and in which map data within the predetermined area, street network data and transit network data of said area for use in route searching, and POI data are server-held data; and a terminal device connected to the route guiding servers via a network, wherein individual route searching servers, on the basis of a process request requested by the terminal device, work cooperatively with one another, refer to the contents-held data, and execute the requested process; wherein the route guiding server is **characterized in that**
the terminal device is a terminal device for selecting one of the plurality of route guiding servers through the agency of the server selecting means on the basis of the server information received from the route guiding server, and notifying the route guiding server of the selected route guiding server;
the route guiding servers comprise area judging means, server judging means, server information acquiring means, and server evaluating means; and the terminal device comprises server selecting means for selecting one of the plurality of route guiding servers on the basis of server information received from the route guiding servers; and
the route guiding server that receives the process request from the terminal device judges, through the agency of the area judging means, an area subjected to processing in said process request; the server judging means judges a route guiding server designating the area that was judged by said area judging means as the service provision area; in a case where there exist a plurality of route guiding servers for which an identical area is designated as the service provision area, the server information acquiring means acquires detailed information relating to the server-held data from the given plurality of route guiding servers; and, on the basis of the detailed information, the server evaluating means sets, as an evaluation value, a numerical value expressing a predetermined ranking according to any one or plurality of the degree of fullness, the quantity of information, and the date of the latest update of the server-held data of each of the route guiding servers, calculates the evaluation value of each of the route guiding servers from the total of the evaluation values, and transmits server information including the evaluation values to the terminal device.

7. The route guiding server according to claim 6 **characterized in that** the map data is made of a map mesh sectioned by predetermined latitude and longitude, and includes map data sectioned by ranking, from high-order mesh map data of the widest range of latitude and longitude to low-order mesh map data obtained through division of the higher order meshes into a predetermined number of divisions; and the server evaluating means calculates, for a route guiding server including more of the low-order mesh map data in the server-held data, an evaluation value that is higher than the evaluation values for other route guiding servers.

8. The route guiding server according to claim 6 **characterized in that** the detailed information of the server-held data includes date-of-data-update information; and the server evaluating means calculates, for a route guiding server that has acquired detailed information having date-of-update information closer to the current date, an evaluation value that is higher than the evaluation values for other route guiding servers.

9. The route guiding server according to claim 6 **characterized in that** the POI data includes POI category classes and POI information belonging to the respective POI category classes; and the server evaluating means calculates, for a route searching server having either or both of a greater number of the POI category classes or a greater quantity of POI information belonging to each of the categories, an evaluation value that is higher than the evaluation values for other route searching servers.

10. The route guiding server according to any of claims 6 to 9 **characterized in that** in a case where a process request from the terminal device includes a data item considered to be important among specific server-held data, the server evaluating means calculates, for a route searching server having server-held data that corresponds to the given data item considered to be important, an evaluation value that is higher than the evaluation values for other route guiding servers.

11. A route guiding method in a route guiding system which is made of route guiding servers for which a predetermined area is designated as a service provision area, and in which map data within the predetermined area, street network data and transit network data of said area for use in route searching, and POI data are server-held data; and a terminal device connected to the route guiding servers via a network, wherein individual route searching servers, on the basis of a process request requested by the terminal device, work cooperatively with one another, refer to the contents-held data, and execute the requested process; the route guiding method **characterized in that**
the route guiding servers comprise area judging means, server judging means, server information acquiring means, and server evaluating means; and the terminal device comprises server selecting means for selecting one of the plurality of route guiding servers on the basis of server information received from the route guiding servers;
the route guiding server that receives the process request from the terminal device judges, through the agency of the area judging means, an area subjected to processing in said process request; the server judging means judges a route guiding server designating the area that was judged by said area judging means as the service provision area; in a case where there exist a plurality of route guiding servers for which an identical area is designated as the service provision area, the server information acquiring means acquires detailed information relating to the server-held data from the given plurality of route guiding servers; and, on the basis of the detailed information, the server evaluating means sets, as an evaluation value, a numerical value expressing a predetermined ranking according to any one or plurality of the degree of fullness, the quantity of information, and the date of the latest update of the server-held data of each of the route guiding servers, calculates the evaluation value of each of the route guiding servers from the total of the evaluation values, and transmits server information including the evaluation values to the terminal device; and
the terminal device, on the basis of the server information received from the route guiding server, selects one of the plurality of route guiding servers through the agency of the server selecting means, and notifies the route guiding server of the selected route guiding server.

12. The route guiding method according to claim 11 **characterized in that** the map data is made of a map mesh sectioned by predetermined latitude and longitude, and includes map data sectioned by ranking, from high-order mesh map data of the widest range of latitude and longitude to low-order mesh map data obtained through division of the higher order meshes into a predetermined number of divisions; and the server evaluating means calculates, for a route guiding server including more of the low-order mesh map data in the server-held data, an evaluation value that is higher than the evaluation values for other route guiding servers.

13. The route guiding method according to claim 11 **characterized in that** the detailed information of the server-held data includes date-of-data-update information; and the server evaluating means calculates, for a route guiding server that has acquired detailed information having date-of-update information closer to the current date, an evaluation value that is higher than the evaluation values for other route guiding servers.

14. The route guiding method according to claim 11 **characterized in that** the POI data includes POI category classes and POI information belonging to the respective POI category classes; and the server evaluating means calculates, for a route searching server having either or both of a greater number of the POI category classes or a greater quantity of POI information belonging to each of the categories, an evaluation value that is higher than the evaluation values for other route searching servers.

15. The route guiding method according to any of claims 11 to 14 **characterized in that** in a case where a process request from the terminal device includes a data item considered to be important among specific server-held data, the server evaluating means calculates, for a route searching server having server-held data that corresponds to the given data item considered to be important, an evaluation value that is higher than the evaluation values for other route guiding servers.

16. A route guiding system made of route guiding servers for which a predetermined area is designated as a service provision area, and in which map data within the predetermined area, street network data and transit network data of said area for use in route searching, and POI data are server-held data; a terminal device connected to the route guiding servers via a network; and a route guiding mediation server connected to the route guiding servers via the network; wherein individual route searching servers, on the basis of a process request requested by the terminal device, work cooperatively with one another via the route guiding mediation server, refer to the contents-held data, and execute the requested process; the route guiding system **characterized in that**
the terminal device comprises server selecting means for selecting one of the plurality of route guiding servers on the basis of server information received from the route guiding servers;
the route guiding mediation server comprises area judging means, server judging means, and server information acquiring means; and the route guiding servers comprise server evaluating means;
when the route guiding mediation server receives a process request from the route guiding server that received a process request from the terminal device, an area subjected to processing in said process request is judged by the area judging means; the server judging means judges a route guiding server designating the area that was judged by said area judging means as the service provision area; in a case where there exist a plurality of route guiding servers designating an identical area as the service provision area, the server information acquiring means acquires detailed information relating to the server-held data from the given plurality of route guiding servers and transmits the information to the route guiding servers; and, through the agency of the server evaluating means, the route searching servers set, as an evaluation value, a numerical value expressing a predetermined ranking according to any one or plurality of the degree of fullness, the quantity of information, and the date of the latest update of the server-held data of each of the route guiding servers, calculates the evaluation value of each of the route guiding servers from the total of the evaluation values, and transmits server information including the evaluation values to the terminal device.

17. The route guiding system according to claim 16 **characterized in that** the map data is made of a map mesh sectioned by predetermined latitude and longitude, and includes map data sectioned by ranking, from high-order mesh map data of the widest range of latitude and longitude to low-order mesh map data obtained through division of the higher order meshes into a predetermined number of divisions; and the server evaluating means calculates, for a route guiding server including more of the low-order mesh map data in the server-held data, an evaluation value that is higher than the evaluation values for other route guiding servers.

18. The route guiding system according to claim 16 **characterized in that** the detailed information of the server-held data includes date-of-data-update information; and the server evaluating means calculates, for a route guiding server that has acquired detailed information having date-of-update information closer to the current date, an evaluation value that is higher than the evaluation values for other route guiding servers.

19. The route guiding system according to claim 16 **characterized in that** the POI data includes POI category classes and POI information belonging to the respective POI category classes; and the server evaluating means calculates, for a route searching server having either or both of a greater number of the POI category classes or a greater quantity of POI information belonging to each of the categories, an evaluation value that is higher than the evaluation values for other route searching servers.

20. The route guiding system according to any of claims 16 to 19 **characterized in that** in a case where a process request from the terminal device includes a data item considered to be important among specific server-held data, the server evaluating means calculates, for a route searching server having server-held data that corresponds to the given data item considered to be important, an evaluation value that is higher than the evaluation values for other route guiding servers.

21. A route guiding mediation server in a route guiding system made of route guiding servers for which a predetermined area is designated as a service provision area, and in which map data within the predetermined area, street network data and transit network data of said area for use in route searching, and POI data are server-held data; a terminal device connected to the route guiding servers via a network; and a route guiding mediation server connected to the route guiding servers via the network; wherein individual route searching servers, on the basis of a process request requested by the terminal device, work cooperatively with one another via the route guiding mediation server, refer to the contents-held data, and execute the requested process; wherein the route guiding mediation server is **characterized in that**
the terminal device comprises server selecting means for selecting one of the plurality of route guiding servers on the basis of server information received from the route guiding servers;
the route guiding servers are route guiding servers which comprise server evaluating means, and which, through the agency of the server evaluating means and on the basis of server information acquired from the route guiding mediation server, set, as an evaluation value, a numerical value expressing a predetermined ranking according to any one or plurality of the degree of fullness, the quantity of information, and the date of the latest update of the server-held data of each of the route guiding servers, calculate the evaluation value of each of the route guiding servers from the total of the evaluation values, and transmit server information including the evaluation values to the terminal device;
the route guiding mediation server comprises area judging means, server judging means, and server information acquiring means; and the route guiding servers comprise server evaluating means; and
when the route guiding mediation server receives a process request from the route guiding server that received a process request from the terminal device, an area subjected to processing in said process request is judged by the area judging means; the server judging means judges a route guiding server designating the area that was judged by said area judging means as the service provision means area; in a case where there exist a plurality of route guiding servers designating an identical area as the service provision area, the server information acquiring means acquires detailed information relating to the server-held data from the given plurality of route guiding servers and transmits the information to the route guiding servers.

22. The route guiding mediation server according to claim 21 **characterized in that** the map data is made of a map mesh sectioned by predetermined latitude and longitude, and includes map data sectioned by ranking, from high-order mesh map data of the widest range of latitude and longitude to low-order mesh map data obtained through division of the higher order meshes into a predetermined number of divisions; and the server evaluating means calculates, for a route guiding server including more of the low-order mesh map data in the server-held data, an evaluation value that is higher than the evaluation values for other route guiding servers.

23. The route guiding mediation server according to claim 21 **characterized in that** the detailed information of the server-held data includes date-of-data-update information; and the server evaluating means calculates, for a route guiding server that has acquired detailed information having date-of-update information closer to the current date, an evaluation value that is higher than the evaluation values for other route guiding servers.

24. The route guiding mediation server according to claim 21 **characterized in that** the POI data includes POI category classes and POI information belonging to the respective POI category classes; and the server evaluating means calculates, for a route searching server having either or both of a greater number of the POI category classes or a greater quantity of POI information belonging to each of the categories, an evaluation value that is higher than the evaluation values for other route searching servers.

25. The route guiding mediation server according to any of claims 21 to 24 **characterized in that** in a case where a process request from the terminal device includes a data item considered to be important among specific server-held data, the server evaluating means calculates, for a route searching server having server-held data that corresponds to the given data item considered to be important, an evaluation value that is higher than the evaluation values for other route guiding servers.

26. A route guiding method in a route guiding system made of route guiding servers for which a predetermined area is designated as a service provision area, and in which map data within the predetermined area, street network data and transit network data of said area for use in route searching, and POI data are server-held data; a terminal device connected to the route guiding servers via a network; and a route guiding mediation server connected to the route guiding servers via the network; wherein individual route searching servers, on the basis of a process request requested by the terminal device, work cooperatively with one another via the route guiding mediation server, refer to the contents-held data, and execute the requested process; wherein the route guiding method is **characterized in that**
the terminal device comprises server selecting means for selecting one of the plurality of route guiding servers on the basis of server information received from the route guiding servers;
the route guiding mediation server comprises area judging means, server judging means, and server information acquiring means; and the route guiding servers comprise server evaluating means; and
when the route guiding mediation server receives a process request from the route guiding server that received a process request from the terminal device, an area subjected to processing in said process request is judged by the area judging means; the server judging means judges a route guiding server designating the area that was judged by said area judging means as the service provision area; in a case where there exist a plurality of route guiding servers designating an identical area as the service provision area, the server information acquiring means acquires detailed information relating to the server-held data from the given plurality of route guiding servers and transmits the information to the route guiding servers; and the route searching servers, through the agency of the server evaluating means and on the basis of the detailed information, set, as an evaluation value, a numerical value expressing a predetermined ranking according to any one or plurality of the degree of fullness, the quantity of information, and the date of the latest update of the server-held data of each of the route guiding servers, calculate the evaluation value of each of the route guiding servers from the total of the evaluation values, and transmit server information including the evaluation values to the terminal device.

27. The route guiding method according to claim 26 **characterized in that** the map data is made of a map mesh sectioned by predetermined latitude and longitude, and includes map data sectioned by ranking, from high-order mesh map data of the widest range of latitude and longitude to low-order mesh map data obtained through division of the higher order meshes into a predetermined number of divisions; and the server evaluating means calculates, for a route guiding server including more of the low-order mesh map data in the server-held data, an evaluation value that is higher than the evaluation values for other route guiding servers.

28. The route guiding method according to claim 26 **characterized in that** the detailed information of the server-held data includes date-of-data-update information; and the server evaluating means calculates, for a route guiding server that has acquired detailed information having date-of-update information closer to the current date, an evaluation value that is higher than the evaluation values for other route guiding servers.

29. The route guiding method according to claim 26 **characterized in that** the POI data includes POI category classes and POI information belonging to the respective POI category classes; and the server evaluating means calculates, for a route searching server having either or both of a greater number of the POI category classes or a greater quantity of POI information belonging to each of the categories, an evaluation value that is higher than the evaluation values for other route searching servers.

30. The route guiding method according to any of claims 26 to 29 **characterized in that** in a case where a process request from the terminal device includes a data item considered to be important among specific server-held data, the server evaluating means calculates, for a route searching server having server-held data that corresponds to the given data item considered to be important, an evaluation value that is higher than the evaluation values for other route guiding servers.
